# EUROPÄISCHE PATENTSCHRIFT

(11) **EP 4 252 098 B1**
(45) Veröffentlichungstag und Bekanntmachung des Hinweises auf die Patenterteilung: **12.03.2025**
(21) Anmeldenummer: 20819644.4
(22) Anmeldetag: 27.11.2020
(51) Int. Cl.: G06F 3/01, A61B 5/00

(54) **INTELLIGENTE MENSCH-MASCHINE SCHNITTSTELLE UND MIT DIESER AUSFÜHRBARES VERFAHREN**
INTELLIGENT HUMAN-MACHINE INTERFACE AND METHOD WHICH CAN BE CARRIED OUT USING SAME
INTERFACE INTELLIGENTE HOMME-MACHINE ET PROCÉDÉ POUVANT ÊTRE MIS EN OEUVRE AU MOYEN DE CELLE-CI

(43) Veröffentlichungstag der Anmeldung: 04.10.2023
(73) Patentinhaber: Palekana Verwaltungs UG (Haftungsbeschränkt), 18516 Süderholz (DE)
(72) Erfinder: GEIER, Andreas, Tokyo 151-0063 (JP)
(74) Vertreter: Beyer, Andreas
(86) Internationale Anmeldenummer: PCT/EP2020/083763
(87) Internationale Veröffentlichungsnummer: WO 2021/079011

(56) Entgegenhaltungen:
- US-A1- 2018 067 552
- US-A1- 2018 081 439
- US-A1- 2018 307 314
- ABDULLAH S. ALMANSOURI ET AL: "An Imperceptible Magnetic Skin", ADVANCED MATERIALS TECHNOLOGIES, vol. 4, no. 10, 10 October 2019 (2019-10-10), DE, pages 1900493 - 1, XP055688067, ISSN: 2365-709X, DOI: 10.1002/admt.201900493
- GILBERT SANTIAGO CAÑÓN BERMÚDEZ ET AL: "Magnetosensitive e-skins with directional perception for augmented reality", SCIENCE ADVANCES, 1 January 2018 (2018-01-01), United States, pages eaao2623 - eaao2623, XP055688173, Retrieved from the Internet <URL:https://advances.sciencemag.org/content/4/1/eaao2623.full.pdf> DOI: 10.1126/sciadv.aao2623

## Beschreibung

Die dargestellte Erfindung betrifft eine neuartige nicht-invasive Mensch-Maschine Schnittstelle sowie ein Verfahren, welches mit einer solchen intelligenten nicht-invasiven Mensch-Maschine Schnittstelle ausgeführt werden kann.

Die steigende Vernetzung und Digitalisierung der heutigen Welt verlangt nach einer intuitiven Kommunikation zwischen einem Menschen (oder auch einem Tier) und elektronischen Geräten aller Art. Als Stichwort sei hier das Internet of Things (IoT) genannt, worunter die Verbindung zu einer Vielzahl von Geräten über das Internet verstanden wird und wodurch gleichzeitig eine Bedienung oder Steuerung dieser Geräte durch Benutzer ermöglicht wird.

Ohne jeglichen Anspruch auf Vollständigkeit seien als Beispiele für solche Geräte genannt: Fahrzeuge aller Art, Haushaltsgeräte, Gebäudeheizungen, Fitnesstrainer, Spielgeräte, Drohnen, medizinische Prothesen, Roboter und vieles andere mehr.

Zur Bedienung und/oder Steuerung solcher und anderer Geräte werden intelligente Mensch-Maschine Schnittstellen benötigt, die einem Menschen (oder Tier) eine möglichst einfache und intuitive Nutzung der Geräte ermöglichen.

In der US 2018/307314 A1 und der WO 2016/168117 A2 ist eine Erfassung einer sich in Abhängigkeit von der Muskelaktivität ändernden elektrischen Signatur anhand von Flächenelektroden und eine Bestimmung der Bewegung anhand dieser Daten offenbart. Die US 2018/067552 A1 sowie die Artikel "An Imperceptible Magnetic Skin" in ADVANCED MATERIALS TECHNOLOGIES, Bd. 4, Nr. 10, 10. Oktober 2019, XP055688067 und "Magnetosensitive e-skins with directional perception for augmented reality" in Science Advances, 1. Januar 2018, XP055688173 offenbaren jeweils eine Erfassung von Bewegungen anhand von magnetischen Daten.

Die vorliegende Erfindung hat die Aufgabe, eine vorzugsweise tragbare, nicht-invasive Mensch-Maschine Schnittstelle bereitzustellen.

Zur Lösung der genannten Aufgabe wird eine vorzugsweise tragbare Mensch-Maschine Schnittstelle gemäß Patentanspruch 1 vorgeschlagen, die zur nicht-invasiven Anbringung an einem Hautareal eines menschlichen oder tierischen Körpers ausgebildet ist und die aufweist:
- eine flexible, erste magnetische Schicht zum Inkontaktkommen mit einer Oberfläche des Hautareals, die eine erste Mehrzahl magnetischer oder magnetisierbarer Elemente enthält oder trägt, deren Magnetfelder zusammen zu jedem Zeitpunkt eine magnetische Signatur bilden, wobei die Flexibilität der Schicht solchermaßen ist, dass die Schicht Verformungen der Oberfläche des Hautareals zumindest im Wesentlichen folgen kann, und wobei sich die magnetische Signatur bei einer Verformung der Oberfläche des Hautareals in messbarer Weise ändert,
- eine Erfassungseinrichtung zur Messung der magnetischen Signatur in Abhängigkeit einer Verformung der flexiblen, ersten magnetischen Schicht, die der dem Hautareal abgewandten Seite der flexiblen Schicht zugewandt ist,
- eine zweite Mehrzahl von Potenzialmessungs-Flächenelektroden, die in der oder auf der flexiblen Schicht dazu angeordnet sind, in unmittelbaren Kontakt mit der Oberfläche des Hautareals zu gelangen, wobei die Gesamtheit der von den Potenzialmessungs-Flächenelektroden zu einem bestimmten Zeitpunkt erzeugten Messsignale eine sich in Abhängigkeit der Muskelaktivität ändernde elektrische Signatur bildet, und
   - eine integrierte oder ausgelagerte Verarbeitungseinheit, die dazu eingerichtet ist, jeweils ein Paar bestehend aus einer magnetischen Signatur und einer zugehörigen elektrischen Signatur einer Konfiguration und/oder Bewegung und/oder einer Kraft, mit der die Bewegung ausgeführt wird, zuzuordnen. Dabei ist es eine wesentliche Eigenschaft der erfindungsgemäßen Mensch-Maschine Schnittstelle, dass ihre Bestandteile sowie auch ihre Funktionen vollständig außerhalb des menschlichen oder tierischen Körpers liegen bzw. stattfinden.

Unter dem Begriff "magnetisches oder magnetisierbares Element" werden im Rahmen dieser Offenbarung jegliche Elemente verstanden, die entweder selbst magnetisch sind oder sich magnetisieren lassen, beispielsweise Permanentmagneten oder magnetisierbare Partikel, die z.B. auch in einem Magnetband oder einem Magnetstreifen angeordnet sein können. Insbesondere wird unter einem magnetischen oder magnetisierbaren Element auch ein stromdurchflossener Leiter wie etwa ein Elektromagnet verstanden. Wichtig ist, dass jedes magnetische oder magnetisierbare Element zu einer nach außen wirksamen Magnetisierung führt, die mit der Erfassungseinrichtung erfasst werden kann.

Die Flexibilität der ersten magnetischen Schicht muss dabei solchermaßen sein, dass die erste magnetische Schicht Verformungen der Oberfläche des Hautareals zumindest im Wesentlichen folgen kann. Dies kann beispielsweise durch eine intrinsische Flexibilität der ersten magnetischen Schicht oder durch ein bewegliches Koppeln an sich starrer Einzelelemente realisiert werden.

Bei einer vorteilhaften Ausführungsform der erfindungsgemäßen Mensch-Maschine Schnittstelle weist die flexible, erste magnetische Schicht eine Mehrzahl Magnete auf, die in Form eines Arrays angeordnet sind. Eine solche flexible magnetische Schicht kann beispielsweise durch das Einbetten handelsüblicher Permanentmagnete mit einfacher Nord-Südpol-Konfiguration in eine bandartige, elastische Silikonschicht realisiert werden. Alternativ oder zusätzlich können stromdurchflossene Leiter, z. B. Elektromagnete in Form eines Arrays, oder kombinierte Sensorelemente (siehe die diesbezügliche Erläuterung weiter unten) in eine bandartige, elastische Silikonschicht eingelassen sein. Andere Anordnungen sind selbstverständlich denkbar und ebenfalls geeignet.

Die flexible, erste magnetische Schicht der erfindungsgemäßen Mensch-Maschine Schnittstelle zeichnet sich ferner dadurch aus, dass eine zweite Mehrzahl von Potentialmessungs-Flächenelektroden in die flexible Schicht solchermaßen eingebettet oder auf sie aufgebracht sind, dass diese Potentialmessungs-Flächenelektroden im Betrieb der Mensch-Maschine Schnittstelle in unmittelbaren Kontakt mit der Oberfläche des Hautareals gelangen. Die erste Mehrzahl und die zweite Mehrzahl können zahlenmäßig gleich sein, jedoch stellt dies keine Bedingung für das Funktionieren der erfindungsgemäßen Mensch-Maschine Schnittstelle dar. Die Potentialmessungs-Flächenelektroden können insbesondere Elektromyographie (EMG)-Elektroden sein, wie sie im Rahmen der Elektromyographie (EMG) genutzt werden. Andere flächige Elektrodenausgestaltungen sind ebenfalls denkbar. Die mittels der Potentialmessungs-Flächenelektroden an der Oberfläche des Hautareals abgeleiteten elektrischen Potentiale sind insbesondere elektromyographische Potentiale, die eine Aussage über die elektrische Aktivität derjenigen Muskeln ermöglichen, die an einer gegebenen Hautverformung beteiligt sind.

Bei einer bevorzugten Ausführungsform, bei der die flexible, erste magnetische Schicht eine Mehrzahl in Form eines Arrays angeordneter Magnete aufweist, entspricht die Anzahl der Magnete der Anzahl der Potentialmessungs-Flächenelektroden und jede Potentialmessungs-Flächenelektrode ist starr mit einem Magnet gekoppelt, beispielsweise durch Anbringen der Potentialmessungs-Flächenelektrode auf der dem Hautareal zugewandten Oberfläche des Magneten.

Eine Kombination aus einer Potentialmessungs-Flächenelektrode und einem damit starr oder zumindest fest gekoppelten magnetischen oder magnetisierbaren Element wird im Rahmen dieser Offenbarung als "kombiniertes Sensorelement" bezeichnet. Die Gesamtheit solcher kombinierter Sensorelemente ist demgemäß dazu in der Lage, nicht nur eine magnetische Signatur zu messen, die sich aus den Magnetfeldern aller magnetischer oder magnetisierbarer Elemente zusammensetzt, sondern auch eine elektrische Signatur bereitzustellen, welche sich aus der Gesamtheit der von den Potentialmessungs-Flächenelektroden zu einem bestimmten Zeitpunkt erzeugten Messsignale zusammensetzt, die bei einer Verformung der Oberfläche des Hautareals mittels der Potentialmessungs-Flächenelektroden ableitbarer Muskelaktivität gemessen werden können. Die aus Messungen der magnetischen Eigenschaften resultierende magnetische Signatur und die aus Messungen der elektromyographischen Potentiale gewonnene elektrische Signatur können zusammen auch als eine kombinierte Signatur bezeichnet werden, die eine durch eine muskelinduzierte Hautverformung entstehende Verschiebung/Verdrehung eines oder mehrerer magnetischer oder magnetisierbarer Elemente in Verbindung mit den zugeordneten hautkonformen Potentialmessungs-Flächenelektroden charakterisiert.

Erfindungsgemäß wird zur Messung der magnetischen Signatur eine dazu ausgestaltete Erfassungseinrichtung verwendet, die der dem Hautareal abgewandten Seite der flexiblen, ersten magnetischen Schicht zugewandt ist. Mit anderen Worten, die Erfassungseinrichtung ist dazu ausgestaltet, jedenfalls diejenigen Änderungen der magnetischen Signaturen der magnetischen Schichten zu erfassen, die bezüglich eines Ausgangszustandes durch eine Verformung der Oberfläche des Hautareals und insbesondere durch eine muskelinduzierte Verformung der Oberfläche des Hautareals hervorgerufen werden.

Bei bevorzugten Ausgestaltungen enthält diese Erfassungseinrichtung mehrere Magnetometer, die vorzugsweise in Form eines Arrays angeordnet sind. Die Form dieses Arrays muss nicht mit dem Array übereinstimmen, in dem die erste Mehrzahl magnetischer oder magnetisierbarer Elemente angeordnet ist. Auch braucht die Anzahl der Magnetometer nicht mit der Anzahl der magnetischen oder magnetisierbaren Elemente übereinzustimmen, die die flexible, erste magnetische Schicht aufweist.

Wenn bei der erfindungsgemäßen Mensch-Maschine Schnittstelle die zuvor erläuterten kombinierten Sensorelemente verwendet werden, dann ist vorzugsweise jede Potentialmessungs-Flächenelektrode und das bzw. die damit fest gekoppelte(n) magnetische(n) oder magnetisierbare(n) Element(e) durch eine elektromagnetische Isolierschicht voneinander getrennt, um magnetische Störfelder abzuschirmen. Eine solche elektromagnetische Isolierschicht kann eine Schicht aus einem Material mit hoher magnetischer Permeabilität sein, wie beispielsweise Eisen, µ-Metall, Kohlenstofffasern etc.

Die erfindungsgemäße Mensch-Maschine Schnittstelle kann optional eine zweite magnetische Schicht mit einer Mehrzahl magnetischer oder magnetisierbarer Elemente aufweisen. Diese zweite magnetische Schicht kann zwischen der flexiblen, ersten magnetischen Schicht und der Erfassungseinrichtung angeordnet sein oder kann sich auf der Seite der Erfassungseinrichtung befinden, die von der flexiblen, ersten magnetischen Schicht abgewandt ist. Die zweite magnetische Schicht braucht nicht flexibel zu sein, kann jedoch zur Erleichterung der nicht-invasiven Anbringung und Verbesserung der Hautkonformität eine gleiche oder ähnliche Flexibilität aufweisen wie die flexible, erste magnetische Schicht. Die zweite magnetische Schicht steht durch ihr Magnetfeld mit der ersten magnetischen Schicht in Wechselwirkung.

Die magnetischen Eigenschaften der ersten und der zweiten magnetischen Schicht sind vorzugsweise solchermaßen, dass die Polarität/magnetischen Ladungen der beiden magnetischen Schichten entgegengesetzt gerichtet ist/sind. Gemäß einer Ausführungsform kann die flexible, erste magnetische Schicht Magnete oder magnetische Partikel enthalten oder Materialeigenschaften derart aufweisen, dass sie, z.B. durch stromdurchflossene Leiter oder Permanentmagnete der zweiten magnetischen Schicht, von außen in einem gewünschten Sinne magnetisierbar ist.

Die durch die erste magnetische Schicht oder durch die erste und zweite magnetische Schicht entstehenden, resultierenden Magnetfelder werden von der Erfassungseinrichtung, vorzugsweise von einem oder mehrerer in einem Array angeordneter Magnetometer, als magnetische Signatur gemessen. Insbesondere die zweite magnetische Schicht kann stromdurchflossene Leiter enthalten, die dazu geeignet sind, die Stärke von Magnetfeldern zu messen, zu steuern und/oder zu kompensieren. Ferner kann die zweite magnetische Schicht vorzugsweise eine magnetische Feldstärke und Polarität aufweisen, die eine Abstoßung der in der flexiblen, ersten magnetischen Schicht verwendeten magnetischen oder magnetisierbaren Elemente und/oder kombinierten Sensorelemente in Richtung der Oberfläche des Hautareals bewirkt. Auf diese Weise wird die Konformität der flexiblen, ersten magnetischen Schicht zur Oberfläche des Hautareals auch bei schnellen Verformungen der Hautoberfläche erhöht und es werden zudem Hysterese-Erscheinungen gemindert, die aus der Nachgiebigkeit der flexiblen Schicht resultieren. Darüber hinaus kann auf diese Weise einer unerwünschten, frühzeitigen Sättigung der Magnetometer entgegengewirkt werden. Eine solche gewollte Beeinflussung der ersten magnetischen Schicht durch die optional vorhandene, zweite magnetische Schicht kann beispielsweise nach Art eines (auch zeitlich veränderlichen) Offsets aus der gemessenen magnetischen Signatur herausgerechnet werden, um eine eventuelle, sich durch die gewollte Beeinflussung ergebende Verfälschung der gemessenen magnetischen Signatur zu kompensieren.

Werden die magnetischen Eigenschaften mindestens einer der magnetischen Schichten durch Elektromagneten bewirkt, können die Magnetfelder der verwendeten Magnete, magnetisierten Partikel oder kombinierten Sensorelemente gesteuert werden, woraus sich weitere Möglichkeiten der Kompensation und/oder Steuerung der Magnetfeldstärke oder -form ergeben. Durch eine solche Steuerung der magnetischen Eigenschaften können deutliche Vorteile hinsichtlich der Präzision und Messgeschwindigkeit der Verformung der Oberfläche des betreffenden Hautareals erreicht werden.

Das Vorsehen einer zweiten magnetischen Schicht und der daraus resultierenden Vorteile wie vorstehend beschrieben kann auch unabhängig vom Vorhandensein der zweiten Mehrzahl von Potenzialmessungs-Flächenelektroden erfolgen. Mit anderen Worten, eine ebenfalls sehr vorteilhafte Ausführungsform der erfindungsgemäßen Mensch-Maschine Schnittstelle weist die zweite magnetische Schicht auf, nicht jedoch die zweite Mehrzahl von Potenzialmessungs-Flächenelektroden. Bei einer solchen Ausführungsform erfolgt die Zuordnung zu einer Konfiguration und/oder Bewegung und/oder einer Kraft, mit der die Bewegung ausgeführt wird, ausschließlich auf der Basis der erfassten magnetischen Signatur.

Falls gewünscht oder abhängig vom Anwendungsfall erforderlich, kann eine zusätzliche elektromagnetische Isolierschicht aus einem Material mit hoher magnetischer Permeabilität, wie beispielsweise Eisen, µ-Metall, Kohlenstofffasern, an der dem Hautareal abgewandten Seite der ersten magnetischen Schicht vorhanden sein, die unter anderem zur Abschirmung magnetischer Störfelder dient. Bei Ausführungsformen mit einer ersten und einer zweiten magnetischen Schicht ist eine solche zusätzliche elektromagnetische Isolierschicht an der dem Hautareal abgewandten Seite der der zweiten magnetischen Schicht anzuordnen.

Unter "magnetischen Eigenschaften" wird im Rahmen der vorliegenden Offenbarung verstanden, dass die magnetischen Eigenschaften der magnetischen Schichten derart ausgebildet sind, dass eine Verformung der Oberfläche des Hautareals, welcher insbesondere die flexible, erste magnetische Schicht folgt, zu einer messbaren Änderung der magnetischen Eigenschaften mindestens einer der Schichten, vorzugsweise der flexiblen, ersten magnetischen Schicht, führt.

Schließlich umfasst die erfindungsgemäße Mensch-Maschine Schnittstelle eine Verarbeitungseinheit, die durch Ausführung eines Algorithmus dazu eingerichtet ist, die gemessenen magnetischen und elektrischen Signaturen einer Konfiguration und/oder Bewegung und/oder deren Intensität zuzuordnen. Insbesondere kann die Verarbeitungseinheit dazu ausgestaltet sein, jeweils ein Paar bestehend aus einer magnetischen Signatur und einer zugehörigen elektrischen Signatur einer Konfiguration und/oder Bewegung und/oder einer Kraft, mit der die Bewegung ausgeführt wird, zuzuordnen.

Die zur Mensch-Maschine Schnittstelle gehörende Verarbeitungseinheit kann integriert oder ausgelagert sein. Mit "integriert" ist hier gemeint, dass die Verarbeitungseinheit sich unmittelbar an der tragbaren Mensch-Maschine Schnittstelle befindet. Jedoch kann diese Verarbeitungseinheit sich auch entfernt von der tragbaren Mensch-Maschine Schnittstelle angeordnet befinden und beispielsweise über eine kabelgebundene und/oder drahtlose Verbindung mit der tragbaren Mensch-Maschine Schnittstelle kommunizieren.

Die Verformung der Oberfläche eines Hautareals kann willkürliche oder unwillkürliche Ursachen haben. Beispielsweise kann ein Mensch seine Extremitäten willkürlich in eine andere Position bringen, was entsprechende Verformungen bestimmter Hautareale nach sich zieht. Andererseits kann es, beispielsweise aufgrund einer Krankheit eines Menschen, zu unwillkürlichen Verformungen bestimmter Hautareale kommen (etwa durch unwillkürliche Muskelkontraktionen oder Organbewegungen), deren Erfassung und Zuordnung einem Arzt ermöglichen kann, eine bessere Diagnose zu stellen.

Unter dem Begriff "Konfiguration" werden im Rahmen der vorliegenden Erfindung Minimalkoordinaten verstanden, die zur Beschreibung der Freiheitsgrade der jeweiligen Extremität notwendig sind, im Falle einer menschlichen Hand bspw. die Gelenkwinkel. Anders ausgedrückt handelt es sich bei einer "Konfiguration" um eine bestimmte Stellung einer menschlichen oder tierischen Extremität (als Beispiele seien hier genannt: Bein gestreckt, Bein abgewinkelt, Hand geöffnet, Hand geschlossen, Arm gerade, Arm abgewinkelt, Hand gegenüber Ellbogen verdreht oder nicht verdreht etc.). Selbstverständlich kann eine Konfiguration auch einen Zustand zwischen zwei Endkonfigurationen angeben, etwa Arm teilweise gestreckt, Hand teilweise geschlossen etc.

Unter dem Begriff "Bewegung" wird im Rahmen der vorliegenden Erfindung eine zeitliche Änderung (insbesondere hinsichtlich Ausmaß und Geschwindigkeit) einer Konfiguration verstanden.

Unter dem Begriff "Intensität der Bewegung" wird im Rahmen der vorliegenden Erfindung die Kraft verstanden, mit der eine Bewegung ausgeführt wird.

Allgemein gesprochen kommt es bei einem menschlichen oder tierischen Körper durch willkürliche oder unwillkürliche Muskel-, Sehnen-, Band-, Knochen- und/oder Organbewegungen zu einer Verformung der Oberfläche von Hautarealen. Solche Verformungen zu erfassen und zuverlässig bestimmten Zuständen (Konfigurationen) und/oder Bewegungen sowie, falls gewünscht, einer Kraft, mit der die Bewegung ausgeführt wird, zuzuordnen, ist ein Ziel der vorliegenden Erfindung.

Die magnetischen Schichten können unterschiedliche Ausgestaltungen annehmen. Wichtig ist jedoch eine ausreichende Konformität insbesondere der flexiblen, ersten magnetischen Schicht mit der Oberfläche des interessierenden Hautareals, damit auftretende Verformungen der Hautoberfläche und die damit einhergehenden Verformungen der flexiblen, ersten magnetischen Schicht zu messbaren Änderungen ihrer magnetischen Eigenschaften führen. Ferner ist die Hautkonformität eine Voraussetzung für eine optimale Messung durch die Potenzialmessungs-Flächenelektroden.

Genauer gesagt werden hinsichtlich beider magnetischer Schichten vorzugsweise Änderungen der magnetischen Feldstärke und/oder Änderungen der magnetischen Flussdichte gemessen. Anders ausgedrückt wird das sich jeweils ergebende Magnetfeld gemessen, wobei sich ein vorhandenes Magnetfeld nicht zwangsläufig selbst ändern muss, sondern sich lediglich aus Sicht der Erfassungseinrichtung nach einer Hautverformung als ein anderes Magnetfeld darzustellen braucht.

Vorteilhaft ist es in diesem Zusammenhang, wenn die magnetischen Schichten eine Polkonfiguration mit vielen Nord-Südpol-Paaren beinhalten bzw. aus solchen bestehen. Auf diese Weise erlaubt eine Verschiebung oder Verdrehung der magnetischen Schichten eine von außen messbare Magnetisierung durch Messung des Magnetfeldes. Maßgeblich ist dabei die Polkonfiguration mit der Stärke der jeweiligen Magnetisierung, sodass Änderungen der magnetischen Flussdichte und/oder magnetischen Feldstärke durch Magnetometer messbar sind.

Ergänzend zur Messung der magnetischen und elektrischen Signatur kann es vorteilhaft sein, weitere Informationen zu erfassen, die sich während einer Verformung der Oberfläche eines interessierenden Hautareals ergeben. Aus diesem Grund sind in bevorzugten Ausführungsformen erfindungsgemäßer Mensch-Maschine Schnittstellen ferner ein oder mehrere Beschleunigungssensoren und/oder Drehratensensoren vorhanden, deren Ausgangssignale ebenfalls der Verarbeitungseinheit zugeführt werden können.

Basierend auf den erfassten magnetischen und elektrischen Signaturen der magnetischen Schichten, zu denen es aufgrund einer Verformung der Oberfläche eines interessierenden Hautareals gekommen ist, führt die Verarbeitungseinheit einen Zuordnungsalgorithmus aus, der die gemessene Änderung (oder die gemessenen Änderungen) der magnetischen und elektrischen Signatur(en) einer Konfiguration und/oder einer Bewegung und/oder einer Kraft, mit der die Bewegung ausgeführt wird, zuordnet.

Anhand der zugeordneten Konfiguration und/oder Bewegung und/oder einer Kraft, mit der die Bewegung ausgeführt wird, kann die Verarbeitungseinheit oder eine nachgelagerte Steuereinheit beispielsweise einen Steuerbefehl erzeugen, der einem Gerät zugeführt wird, welches daraufhin eine dem Steuerbefehl entsprechende Aktion ausführt. Somit entspricht die von dem Gerät ausgeführte Aktion der zumindest einen von der Verarbeitungseinheit bzw. dem Zuordnungsalgorithmus zugeordneten Konfiguration und/oder Bewegung und/oder einer Kraft, mit der die Bewegung ausgeführt wird. Bei der zugeordneten Konfiguration und/oder Bewegung und/oder einer Kraft, mit der die Bewegung ausgeführt wird, kann es sich beispielsweise um eine Geste oder kontinuierliche Bewegung einzelner oder mehrerer Finger handeln.

Die Zuordnung der von der Erfassungseinrichtung beispielsweise mittels Magnetometer-Messungen erfassten Änderung der magnetischen Eigenschaften der magnetischen Schichten zu beispielsweise einer Konfiguration einer menschlichen Extremität lässt sich vorteilhaft unter Zuhilfenahme künstlicher Intelligenz erreichen.

Die Verarbeitungseinheit einer erfindungsgemäßen Mensch-Maschine Schnittstelle ist deshalb vorzugsweise dazu eingerichtet, die gemessene Änderung der magnetischen Signaturen der magnetischen Schicht oder Schichten unter Zuhilfenahme von Bayes-Klassifikatoren, eines künstlichen neuronalen Netzes (beispielsweise Convolutional Long Short-Term Memory Netzwerke oder Graph Neuronale Netzwerke), einer Support Vector Machine, einer Finite State Machine, eines Hidden Markov Modells, einer Relevance Vector Machine, eines Dynamic Time Warping Verfahrens, eines Conditional Random Field Verfahrens, eines Entscheidungsbaums, eines Random Forest Verfahrens, eines k-nearest Neighbors Algorithmus, einer Diskriminanzanalyse, einer linearen Regression, einer logistischen Regression, eines Gauß-Prozesses, eines Perceptrons und/oder von Ensemble-Methoden (Bayes Optimal Classifier, Bagging, Boosting) einer Konfiguration und/oder Bewegung und/oder einer Kraft, mit der die Bewegung ausgeführt wird, zuzuordnen, unter zusätzlicher Einbeziehung der von den Potenzialmessungs-Flächenelektroden erhaltenen Daten, und gegebenenfalls unter Einbeziehung derjenigen Daten, die von Drehraten- und/oder Beschleunigungssensoren geliefert werden. Allgemein kann gesagt werden, dass zunächst Datensätze bestehend aus bestimmten magnetischen und elektrischen Signaturen und einer zugehörigen, beliebigen Konfiguration und/oder Bewegung aufgenommen werden und anschließend der Zusammenhang dieser Größen in einem sogenannten Training bestimmt wird. Es ist zu unterscheiden zwischen einem Lern- bzw. Trainingsmodus, in dem ausreichend Messdaten erfasst und zugeordnet werden müssen, um anschließend in einem Prädiktionsmodus eine zutreffende Zuordnung einer einzigen oder mehrerer Messungen der Mensch-Maschine Schnittstelle zu einer Konfiguration und/oder Bewegung und/oder einer Kraft, mit der die Bewegung ausgeführt wird, zu ermöglichen. Da die gemessenen Veränderungen der magnetischen Eigenschaften neben Sehnen-, Knochen-, oder Organbewegungen im Wesentlichen auf die durch Muskelaktivierung und schließlich Muskelkontraktion entstehende Hautverformung zurückgehen, werden erfindungsgemäß diese Muskelaktivierungen bzw. damit einhergehende, messbare Elektrodenpotenzialänderungen durch die Potenzialmessungs-Flächenelektroden erfasst und zur weiteren Verbesserung der Erkennung von Konfigurationen und/oder Bewegungen und/oder den Kräften, mit denen die Bewegung ausgeführt werden, durch die Verarbeitungseinheit herangezogen.

Vorteilhafte Ausführungsformen der erfindungsgemäßen Mensch-Maschine Schnittstelle sind ferner mit einer Kommunikationseinheit zum Datenaustausch mit zumindest einem externen Gerät versehen, welches basierend auf den mit der Mensch-Maschine Schnittstelle ausgetauschten Daten eine Aktion ausführen kann, die der zumindest einer zugeordneten Konfiguration und/oder Bewegung und/oder einer Kraft, mit der die Bewegung ausgeführt wird, entspricht.

Beispielsweise kann eine erfindungsgemäße Mensch-Maschine Schnittstelle in eine Smartwatch integriert sein, so dass Funktionen der Smartwatch unter Zuhilfenahme der erfindungsgemäßen Mensch-Maschine Schnittstelle ausgeführt werden können. Denkbar wäre beispielsweise, dass bestimmte Finger- und/oder Handbewegungen bestimmten Funktionen und/oder Steuerbefehlen einer Smartwatch zugeordnet werden, sodass die Smartwatch durch Ausführen dieser Bewegungen einfach und intuitiv bedient werden kann. Eine andere Anwendung könnte das Steuern von Robotern im Sinne der Telerobotik sein, wobei die zu steuernden Freiheitsgrade des Roboters bzw. seines Endeffektors unter Einbeziehung der durch die Verarbeitungseinheit identifizierten Konfiguration und/oder Bewegung und/oder einer Kraft, mit der die Bewegung ausgeführt wird, gesteuert werden.

Die vorliegende Erfindung ist auch auf ein Verfahren gemäß Patentanspruch 12 zum Erfassen einer Verformung der Oberfläche eines Hautareals eines menschlichen oder tierischen Körpers und Zuordnen der erfassten Verformung zu einer Konfiguration und/oder Bewegung und/oder einer Kraft, mit der die Bewegung ausgeführt wird, gerichtet. Das Verfahren umfasst die Schritte:
- Anordnen einer ersten Mehrzahl magnetischer oder magnetisierbarer Elemente an oder nahe einem Hautareal derart, dass das erste Array einer Hautverformung zumindest im Wesentlichen folgen kann,
- Anordnen einer zweiten Mehrzahl von Potenzialmessungs-Flächenelektroden solchermaßen, dass die Potenzialmessungs-Flächenelektroden in unmittelbaren Kontakt mit der Oberfläche des Hautareals gelangen,
- Ermitteln zumindest einer sich aufgrund einer Hautverformung ergebenden, messbaren Änderung einer magnetischen Signatur der Gesamtheit der ersten Mehrzahl magnetischer oder magnetisierbarer Elemente mittels einer Erfassungseinrichtung zur Messung der magnetischen Signatur,
- Aufnehmen der von der Gesamtheit der zweiten Mehrzahl von Potenzialmessungs-Flächenelektroden zu einem bestimmten Zeitpunkt erzeugten Messsignale zur Gewinnung zumindest einer sich in Abhängigkeit derMuskelaktivität ändernden elektrischen Signatur, und
- Ausführen eines Algorithmus zum Zuordnen der ermittelten zumindest einen magnetischen Signatur und der gewonnenen zumindest einen elektrischen Signatur zu einer Konfiguration und/oder Bewegung und/oder einer Kraft, mit der die Bewegung ausgeführt wird.

Wie zuvor schon erläutert, kann die Verformung der Oberfläche des Hautareals auf einer unwillkürlichen oder willkürlichen Muskel-, Sehnen-, Band-, Knochen- und/oder Organbewegung basieren, wobei muskelinduzierte Bewegungen mit der Aktivierung von Muskeln einhergehen und somit eine Erfassung von (elektrischen) Oberflächenpotenzialen ermöglichen. Wie bereits zuvor im Zusammenhang mit der erfindungsgemäßen Mensch-Maschine Schnittstelle erläutert, handelt es sich bei dem Zuordnungsalgorithmus vorzugsweise um eine trainierte künstliche Intelligenz, die den Zusammenhang zwischen magnetischen Signaturen und elektrischen Signaturen und zugehörigen Konfigurationen und/oder Bewegungen und/oder einer Kraft, mit der die Bewegung ausgeführt wird, auf der Grundlage eines Datensatzes bestehend aus wenigstens einer magnetischen Signatur und wenigstens einer elektrischen Signatur und der zugehörigen Konfiguration und/oder Bewegung und/oder einer Kraft, mit der die Bewegung ausgeführt wird, bestimmt oder erlernt hat. Als Zuordnungsalgorithmus können dabei vorzugsweise diejenigen Algorithmen verwendet werden, die oben im Zusammenhang mit der Mensch-Maschine Schnittstelle bereits genannt worden sind.

Unter dem Begriff "magnetische Signatur" und "elektrische Signatur" wird die Gesamtheit der zu messenden bzw. der gemessenen Änderungen der magnetischen und elektrischen Eigenschaften des Magnet- und Elektroden-Arrays verstanden, die sich durch eine stattgefundene Verformung der Oberfläche eines interessierenden Hautareals oder der darunterliegenden Muskulatur ergeben. Als Referenz kann dabei eine andere magnetische/elektrische Signatur dienen, die einen Ausgangszustand vor Eintritt einer Hautverformung beschreibt.

Insbesondere kann anhand einer vorgegebenen Referenzkonfiguration vor Beginn einer Erfassung einer Änderung der magnetischen/elektrischen Signatur eine Signalkonditionierung oder -initialisierung vorgenommen werden. Beispielsweise können für eine solche Referenzkonfiguration alle Messsignale genullt und Änderungen der magnetischen/elektrischen Signatur ausgehend von dieser Referenzkonfiguration gemessen werden. Gemäß einem Ausführungsbeispiel setzt sich jede magnetische Signatur aus gemessenen magnetischen Feldstärken und/oder gemessenen magnetischen Flussdichten eines Magnet-Arrays zusammen, das kombinierte Sensorelemente verwendet. Die magnetischen Signaturen werden somit erfindungsgemäß um elektrische Signaturen erweitert, wobei die magnetische Signatur aus einer Verformung der Hautoberfläche resultiert und die elektrische Signatur durch elektromyografische Oberflächenmessungen der unter den verformten Hautarealen liegenden Muskeln gewonnen wird.

Bei der vorliegenden Erfindung stellen somit die sich im Rahmen einer Hautverformung ergebenden, gemessenen Änderungen der magnetischen und elektrischen Eigenschaften der magnetischen Schicht(en) das Nutzsignal dar. Andere Änderungen, die beispielsweise durch Störgrößen wie das Erdmagnetfeld oder magnetische Gegenstände hervorgerufen werden können, müssen gegebenenfalls aus den gemessenen Signalen herausgefiltert werden. Befinden sich beispielsweise magnetische Bauteile in der Mensch-Maschine Schnittstelle, so können diese mittels einer sogenannten Hard-Soft-Iron Kalibrierung dauerhaft kompensiert werden, d.h. eine solche Kalibrierung muss für eine gegebene Mensch-Maschine Schnittstelle nur einmal durchgeführt werden. Auch das Erdmagnetfeld an einem gegebenen Anwendungsort der Mensch-Maschine Schnittstelle kann dauerhaft kompensiert werden. Zur Kompensation von magnetischen Störfeldern können zusätzliche Magnetometer referenziert werden und/ oder elektromagnetische Materialen zur Abschirmung genutzt werden, bspw. hoch-permeable Eisen- oder µ-Metalle.

Ausführungsbeispiele einer erfindungsgemäßen Mensch-Maschine Schnittstelle und des erfindungsgemäßen Verfahrens werden im Folgenden anhand der beigefügten, schematischen Zeichnungen näher erläutert. Es zeigt:
- Fig. 1:: eine schematische Darstellung des Aufbaus einer ersten Ausführungsform einer erfindungsgemäßen Mensch-Maschine Schnittstelle,
- Fig. 2:: eine schematische Darstellung des Aufbaus einer zweiten Ausführungsform einer erfindungsgemäßen Mensch-Maschine Schnittstelle,
- Fig. 3:: ein Blockschaltbild eines Verfahrens zur Erkennung kontinuierlicher Bewegungen am Beispiel von Finger- und Handbewegungen, und
- Fig. 4:: ein Flussdiagramm zur Veranschaulichung des experimentellen Aufbaus zur Evaluierung der erfindungsgemäßen Mensch-Maschine Schnittstelle unter Verwendung des erfindungsgemäßen Verfahrens.

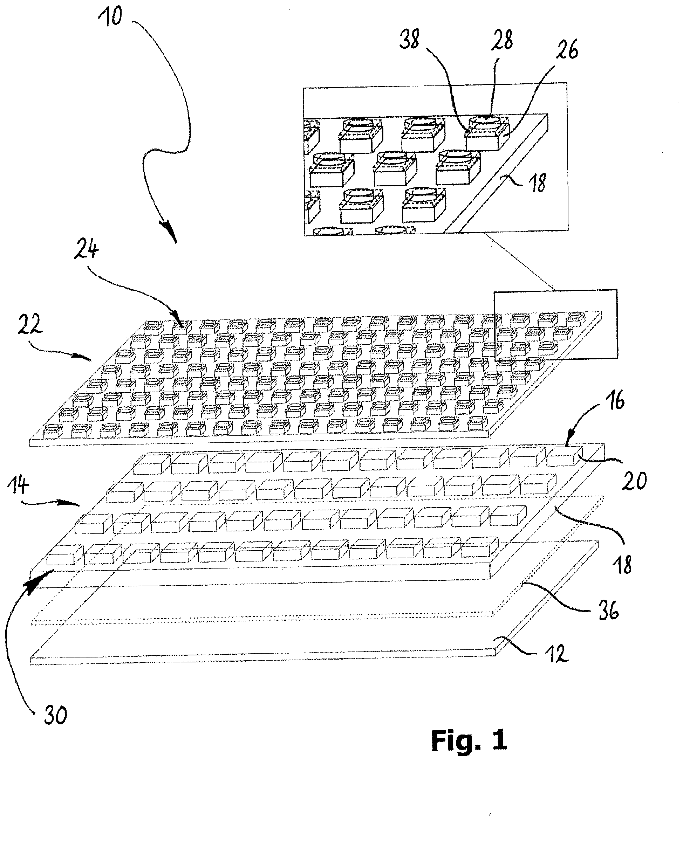

Fig. 1 zeigt in einer auseinandergezogenen Darstellung schematisch den schichtweisen Aufbau einer allgemein mit 10 bezeichneten Mensch-Maschine Schnittstelle, die zur Ausführung eines im Folgenden noch genauer beschriebenen Ausführungsbeispiels eines erfindungsgemäßen Verfahrens verwendet wurde. Im hier beschriebenen Ausführungsbeispiel hat die Mensch-Maschine Schnittstelle 10 eine insgesamt bandartige Gestalt und weist ein bandförmiges Tragelement 12 auf, mittels dessen sich die Mensch-Maschine Schnittstelle 10 z. B. am Handgelenk eines Benutzers einem Hautareal (nicht gezeigt) zugewandt befestigen lässt. Hierzu ist das Tragelement 12 vorzugsweise flexibel ausgebildet, kann jedoch in anderen, nicht gezeigten Ausführungsformen auch starr sein.

Auf dem Tragelement 12 ist eine Schicht 14 angeordnet, die zur Positionierung eines Arrays aus Magnetometern 16 dient. Jedes Magnetometer 16 enthält in diesem Ausführungsbeispiel kombinierte Hall-Effektsensoren und kann somit die magnetische Flussdichte in x-, y- und z-Richtungen messen. Das Magnetometer-Array ist hier als gedruckte Leiterplatte 18 mit 4x12 Sensorchips 20 ausgeführt, in denen die Magnetometer 16 angeordnet sind. Jeder Sensorchip 20 enthält hier neben einem Magnetometer 16 noch einen Beschleunigungssensor sowie einen Drehratensensor und ermöglicht somit falls gewünscht eine 9-Achsenmessung.

In Fig. 1 oberhalb der Schicht 14 befindet sich eine hier ebenfalls bandförmige und aus Silikonkautschuk bestehende, flexible, erste magnetische Schicht 22, in die ein 8x16 Array aus insgesamt 128 sogenannten kombinierten Sensorelementen 24 eingebettet ist. Der im hier beschriebenen Ausführungsbeispiel verwendete Silikonkautschuk ist durchsichtig.

Jedes kombinierte Sensorelement 24 weist einen Magnet 26, der hier als Permamentmagnet ausgestaltet ist, und eine Potenzialmessungs-Flächenelektrode 28 auf, die sich auf der dem Hautareal zugewandten Seite des Magneten 26 befindet und starr mit ihm gekoppelt ist. Die Potenzialmessungs-Flächenelektroden 28 sind im gezeigten Beispiel Elektromyographie (EMG)-Elektroden zur Messung elektromyographischer Potentiale.

Die als erste magnetische Schicht bezeichnete, flexible Schicht 22 mit den darin eingebetteten kombinierten Sensorelementen 24 liegt in Übereinstimmung mit dem angenommenen Anwendungsbeispiel hautkonform an der Unterseite des Unterarms nahe dem Handgelenk eines Benutzers an. Aufgrund des magnetischen Messprinzips brauchen die Magnetometer 16 und die kombinierten Sensorelemente 24 nicht durch ein physikalisches Medium gekoppelt sein, wie es beispielsweise bei Kraft- oder Drucksensoren notwendig ist. Die flexible Schicht 22 aus Silikonkautschuk ist hochelastisch, um Hysterese-Erscheinungen zu minimieren, dabei jedoch ausreichend nachgiebig, um auch kleinen Hautverformungen folgen zu können.

Das Magnetometer-Array mit den darauf angeordneten Magnetometern 16 bildet zusammen mit hier nicht dargestellten Multiplexem sowie einem ebenfalls nicht gezeigten Mikrocontroller eine Erfassungseinrichtung 30 der erfindungsgemäßen Mensch-Maschine Schnittstelle 10. Als Mikrocontroller kann beispielsweise ein bereits in einer Smartwatch oder einem anderen elektronischen Gerät vorhandener Mikrocontroller oder ein Mikroprozessor verwendet werden.

Die EMG-Elektroden 28 sind mit einer Fachleuten auf diesem Gebiet bekannten und daher nicht weiter erläuterten und gezeigten Messelektronik verbunden.

Vom Mikrocontroller werden die erfassten Magnetometer-Messungen und elektromyografischen Messsignale einer hier nicht dargestellten Verarbeitungseinheit zugeführt, die mittels eines in ihr implementierten Algorithmus eine Zuordnung einer gemessenen magnetischen und elektrischen Signatur zu einer Konfiguration und/oder Bewegung und/oder deren Intensität ausführen kann. Diese Verarbeitungseinheit kann beispielsweise in eine Smartwatch integriert sein und wäre dann integraler Bestandteil der Mensch-Maschine Schnittstelle 10, sie kann sich jedoch auch entfernt von der Mensch-Maschine Schnittstelle befinden und beispielsweise drahtlos mit der in den Figuren gezeigten Anordnung kommunizieren. Aufgrund der Verwendung der zuvor bereits diskutierten kombinierten Sensorelemente 24 können zusätzlich zu der von den Magneten 26 erzeugten magnetischen Signatur elektrische Signaturen (hervorgerufen durch die Muskelaktivität) gemessen und an die Verarbeitungseinheit (nicht dargestellt) übermittelt werden.

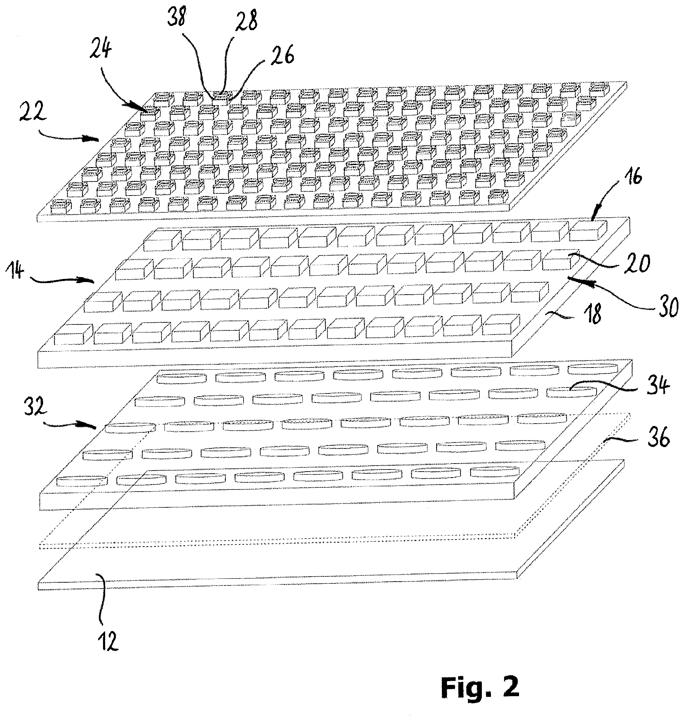

Fig. 2 zeigt schematisch ein zweites Ausführungsbeispiel einer Mensch-Maschine Schnittstelle 10, bei der eine zusätzliche, zweite magnetische Schicht 32 mit insgesamt vierzig Elektromagneten 34 vorhanden ist, die in Form eines 5x8 Arrays angeordnet sind. Anstelle der hier verwendeten Elektromagneten 34 könne auch andere magnetische oder magnetisierbare Elemente zum Einsatz kommen (nicht gezeigt). Im in Fig. 2 gezeigten Beispiel befindet sich die zweite magnetische Schicht 32 zwischen dem Tragelement 12 und der Schicht 14, jedoch könnte die zweite magnetische Schicht auch zwischen der Schicht 14 und der flexiblen, ersten magnetischen Schicht 22 angeordnet sein.

Die zweite magnetische Schicht 32 dient im gezeigten Ausführungsbeispiel dazu, im Betrieb der Mensch-Maschine Schnittstell 10 eine magnetische Feldstärke und Polarität solchermaßen aufzubauen, dass eine Abstoßung der Magnete 26 innerhalb der flexiblen, ersten magnetischen Schicht 22 in Richtung der Oberfläche des genannten Hautareals bewirkt wird. Auf diese Weise wird die Hautkonformität der flexiblen Schicht 22auch bei schnellen Verformungen der Hautoberfläche erhöht und es werden zudem durch die Nachgiebigkeit der flexiblen Schicht 22 verursachte Hysterese-Erscheinungen gemindert. Darüber hinaus kann auf diese Weise einer zu frühen Sättigung der Magnetometer 16 entgegengewirkt werden.

Zur Vermeidung von Störungen der magnetischen Feldstärken der ersten magnetischen Schicht 22 und der zweiten magnetischen Schicht 32 ist in der in Fig. 2 gezeigten Ausführungsform zu Abschirmungszwecken eine magnetisch hoch-permeable Schicht 36 zwischen dem Tragelement 12 und der zweiten magnetischen Schicht 32 vorgesehen. Ferner ist eine weitere magnetisch hoch-permeable Schicht 38 zwischen jedem Magneten 26 und der zugehörigen EMG-Elektrode 28 vorhanden, um den Einfluss von Störungen zwischen der EMG-Elektrode 28 und dem Magneten 26 eines kombinierten Sensorelements 24 innerhalb der ersten magnetischen Schicht 22 zu minimieren.

### Erfindungsgemäßes Verfahren

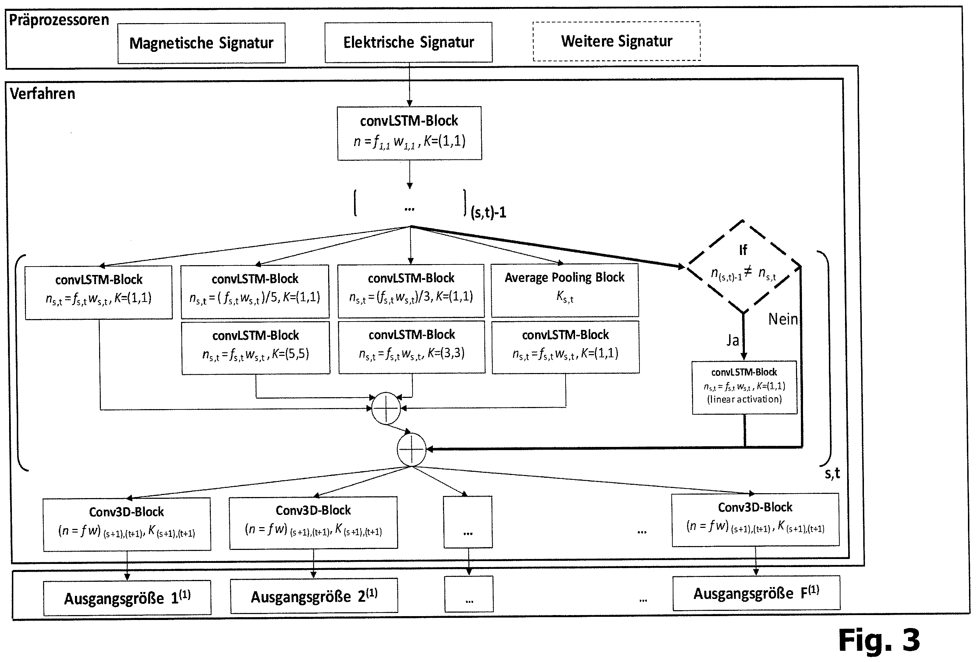

Um die Erkennung kontinuierlicher Finger- und Handbewegungen mit Hilfe der beschriebenen tragbaren Mensch-Maschine Schnittstelle 10 zu ermöglichen, wurde ein auf neuronalen Netzwerken beruhendes Verfahren entwickelt, siehe insbesondere Figur 3. Das Verfahren implementiert einen überwachten Lernalgorithmus, welcher magnetische, ggf. elektrische, und ggf. weitere Signaturen, bspw. kapazitiver und optischer Sensor-Arrays, gemessenen Ausgangs-, d.h., Zielgrößen zuordnet. Das Verfahren, d.h. die neuronale-Netzwerk-Architektur, verwendet typischerweise Daten, die aus einer Domänen-spezifischen Datenkonditionierung stammen. Obwohl das beschriebene Verfahren im Rahmen der vorliegenden Offenbarung in erster Linie darauf gerichtet ist, eine Zuordnung zu einer Konfiguration und/oder Bewegung und/oder deren Intensität auf der Basis erfasster magnetischer Signaturen, ggf. in Kombination mit gemessenen elektrischen und weiteren Signaturen, zu ermöglichen, sei an dieser Stelle ausdrücklich darauf hingewiesen, dass ein solches Verfahren sich zur Verarbeitung jedweder Art von Signaturen und Kombinationen daraus eignet. Ein solches Verfahren kann demnach die Zuordnung zu einer Konfiguration und/oder Bewegung und/oder deren Intensität beispielsweise auch basierend auf mittels eines oder mehrerer kapazitiver Sensoren erfasster kapazitiver Signaturen ermöglichen, falls gewünscht auch in Kombination mit anderen elektrischen Signaturen, z. B. elektromyographischen Signaturen, und ggf. weiteren Signaturen. Ebenso kann ein solches Verfahren die Zuordnung zu einer Konfiguration und/oder Bewegung und/oder deren Intensität beispielsweise auch basierend auf mittels eines oder mehrerer optischer Sensoren erfasster optischer Signaturen ermöglichen, falls gewünscht wiederum in Kombination mit anderen Signaturen elektrischer und/oder magnetischer Art. Solche alternativen Ausführungsformen des vorliegend beschriebenen Verfahrens sind ebenfalls Teil der vorliegenden Offenbarung.

Da es sich bei den Daten um Messungen zeitlicher Abfolgen mit räumlicher Anordnung handelt, können zusätzliche statistische oder physikalische Berechnungsgrößen aus den Messungen konstruiert und als ergänzender Filterkanal im Verfahren vorteilhaft berücksichtigt werden: Beispielsweise kann aus den Magnetometer-Messungen in x-, y-, z-Richtung der Vektorbetrag berechnet werden und als Bild-äquivalenter Kanal konkateniert werden. Dasselbe gilt für die hochfrequenten elektrischen Signaturen, welche laufend durch die Definition gleitender Fenster (engl. Sliding-Window Approach) mit Hilfe statistischer Kenngrößen ausgewertet werden können. In diesem Sinne können auch Signale aus magnetischer und elektrischer Signatur sowie Signale aus unterschiedlichen Zeitschritten kombiniert werden. Somit lässt sich nicht nur die Performanz der Prädiktion der eigentlichen Finger- und Handbewegungen wesentlich steigern, sondern es lassen sich auch zusätzliche physikalische Informationen oder statistische Informationen zur Auswertung medizinischer oder nutzerspezifischer Fragestellungen gewinnen.

Das beschriebene Verfahren ist nicht auf Finger- und Handbewegungen beschränkt, sondern ermöglicht generell die Zuordnung gemessener, kombinierter Signaturen mit physiologisch assoziierten Bewegungen oder Bewegungsintensitäten als Ausganggrö-ßen.

Fig. 3 zeigt, dass das erfindungsgemäße Verfahren zur Erkennung kontinuierlicher Bewegungen Convolutional Long-Short-Term-Memory (*convLSTM,* d.h. LSTM mit convolutional Kernel)- und 3D-Convolutional (Conv3D)-Neuronalen Netzwerken basiert. Präprozessoren nehmen eine Domänen-spezifische Signalkonditionierung vor, bspw. eine Artefaktbeseitigung im Falle elektrischer Signaturen aus EMG-Messungen, typischerweise auch eine Normalisierung in das Intervall, hier [0,1], und insbesondere das Rendern in das Eingangsformat von Bild-äquivalenten Matrizen. Die resultierenden Signale aus dem Präprozessor werden jeweils mit Hilfe von *convLSTM-*Blöcken mit *1×1*-Kernel nicht-linear projiziert und an die Blöcke im Klammerausdruck weitergegeben. Das Verfahren ist durch die Parameter s = 1,2,...,S (Stufe) und t = 1,2,...,T (Tiefe) modular aufgebaut und skalierbar. Der Parameter n_{s,t} steht für die Gesamtzahl der Filter n in Stufe s mit Tiefe t und mit der Kernel-Größe K. Der Parameter f_{s,t} stellt die Filterbasiszahl dar, welche in Kombination mit dem Filtermultiplikator w_{s,t} die Weite der Architektur steuert. Die gesamte Architektur ist somit auf eine Vielzahl von Problemgrößen mit unterschiedlicher Komplexität durch variierende Anzahl an Eingangs- und zu prädizierenden Ausgangsgrößen flexibel anpassbar, da Weite und Tiefe skaliert werden können. Der Pfad mit den durch Fettdruck hervorgehobenen Pfeilen stellt eine Skip-Connection dar.

Die Anzahl und Auswahl der Ausgangsgrößen ist anwendungsspezifisch. Im Falle der Vorhersage beispielsweise einzelner Gesten im Rahmen eines Klassifizierungsproblems ist die einzige Ausgangsgröße eine One-Hot-Matrix, wobei die Aktivierungsfunktion des mit ihr assoziierten conv3D-Blocks standardmäßig als Softmax-Aktivierung definiert wird.

Der Domänen-spezifische Präprozessor liefert Artefakt-freie, typischerweise in das Intervall [0,1] skalierte bzw. normalisierte und bildartig, topografisch, d.h. räumlich sinnvoll angeordnete, gerenderte Eingangsdaten als numerisch verarbeitbare Matrizen der Dimension (Sequenzlänge, Anzahl der Sensorelemente in x-Richtung, Anzahl der Sensorelemente in y-Richtung, Kanaltiefe: Gesamtheit der Dimension eines Messwertes und der Dimensionen konstruierter Berechnungsgrößen). Messwerte mit hoher statistischer Schwankung können durch gleitende statistische Berechnungsgrößen einer Folge von Messwerten ersetzt oder ergänzt werden. Dies ist im Falle von EMG-Messungen besonders vorteilhaft, da durch deren im Vergleich zu Magnetometer-Messungen hohe Abtastrate statistische Berechnungsgrößen über den Zeithorizont von der letzten bis zur nächsten Magnetometer-Messung erhoben und somit die unterschiedlichen Abtastraten sinnvoll synchronisiert werden können. Statistische Berechnungsgrößen zur Auswertung von EMG-Signalen sind unter anderem Mean Absolute Value, Mean Absolute Value Slope, Slope Sign Changes, Waveform Lengths, Zero Crossings, Root Mean Square, Waveform Length, Number of Zero-Crossings, Variance und Maximum in der zeitlichen Domäne und Wavelet Packet-Transformationen in der Frequenzdomäne.

Zur Erläuterung sei hier angenommen, dass die Magnetometer das magnetische Feld in x,y,z-Richtung messen und ein Messwert die Dimension drei annimmt. Hierdurch können physikalische Berechnungsgrößen konstruiert werden, z. B. der Vektorbetrag, der Einheitsvektor etc.

Elektromyografie-Messungen haben üblicherweise die Dimension eins, d.h. die Potenzialänderung gemessen durch eine Elektrode. Somit lassen sich Messwerte eines Arrays aus Magnetometern sowie die Elektromyografie-Messungen, nach der Artefakt-Entfernung, Analog/Digital-Umwandlung sowie Filterung, in Bild-äquivalente Matrizen rendern, welche bei räumlich sinnvoller Anordnung, d.h. üblicherweise entsprechend ihrer Position im Sensor-Array, eine topografische Abbildung der Messwerte entsprechend ihrer jeweiligen Domäne darstellen. In der vorliegenden Ausführungsform des Verfahrens werden diese domänenspezifischen Sequenzen Bild-äquivalenter Matrizen entlang der Kanaltiefe konkateniert. Die Kanaltiefe steigt demnach mit der Anzahl der domänenspezifischen Messwerte sowie mit der Anzahl konstruierter Berechnungsgrößen. Eine Sequenz einer zeitlichen Abfolge dieser kombinierten Bild-äquivalenten Matrizen lässt sich dann dem Verfahren zuführen. Die in der Architektur des Verfahrens vorkommenden Blöcke sind in Tabelle 1 zusammengefasst.

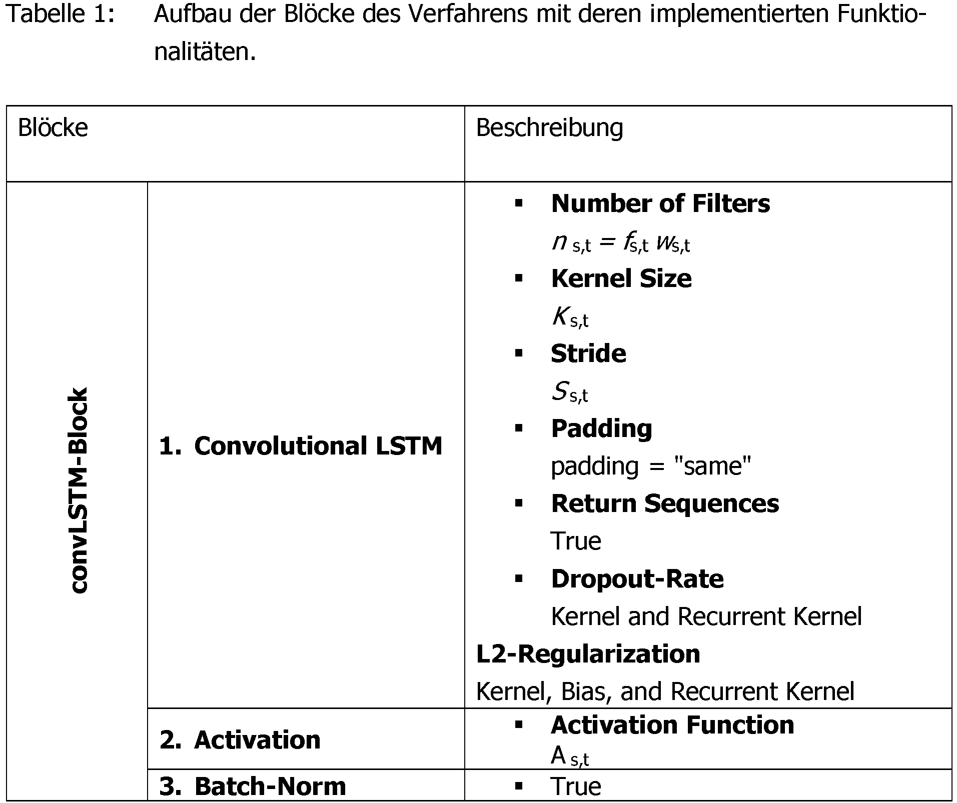

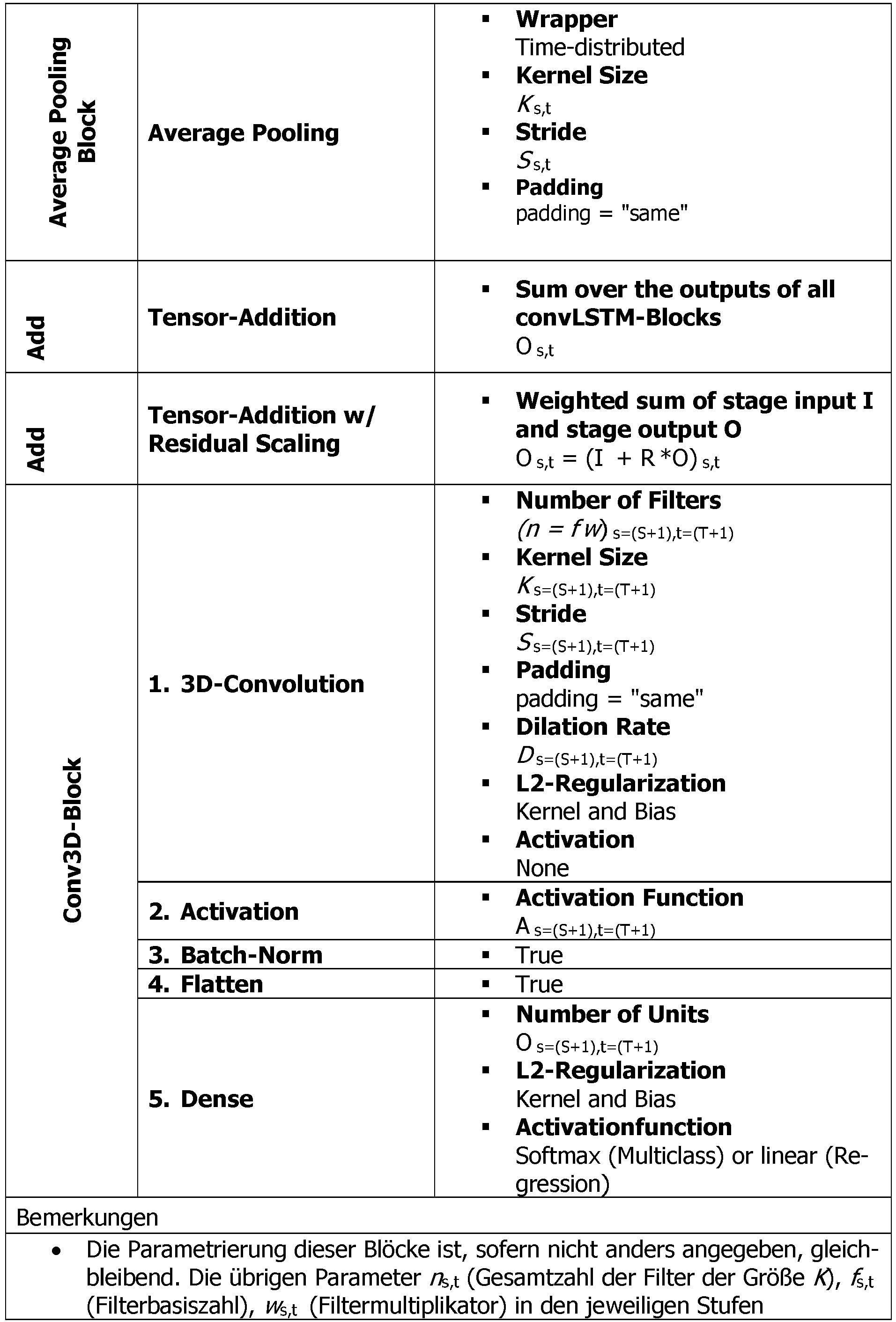

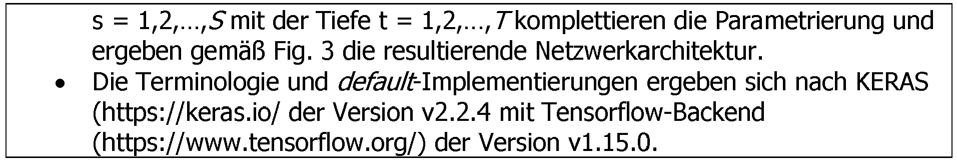

Das beschriebene Verfahren erlaubt es, sowohl diskrete Klassen im Rahmen eines Mehrklassen-Klassifizierungsproblems (bspw. Gesten) als auch kontinuierliche Ausgangsgrößen im Rahmen eines Regressionsproblems (bspw. Gelenkwinkelverläufe der Extremitäten) auf der Grundlage der durch die Mensch-Maschine Schnittstelle gemessenen Daten sicher vorherzusagen. Der durch die Klassen beschriebene Lösungsraum ist bei einer Gestenidentifizierung oftmals auf die Anzahl der Gesten beschränkt. In einem nicht-überwachten Lernproblem wie bspw. dem k-means Kluster-Algorithmus müssen diese Klassen aber keinesfalls vordefiniert sein. Zum einen ist es möglich, viele diskrete Gesten in Abhängigkeit des Anwendungsszenarios (z. B. Steuerung einer Smartwatch) zu definieren, d.h. den Lösungsraum auszuweiten, und das beschriebene Verfahren als Multiklassen (Multiclass)-Klassifizierung auszuführen. Zum anderen ist es möglich, zwischen den definierten, diskreten Gesten, die gewünschte Endkonfigurationen darstellen, biomechanisch sinnvolle und geschmeidig ablaufende Bewegungen vorzugeben, sodass auch komplexere Anwendungen (z. B. Steuerung einer Handprothese) realisierbar sind.

Im Folgenden wird beschrieben, wie mit Hilfe des Verfahrens eine Identifizierung ermöglicht wird, welche über das Erkennen diskreter Klassen hinausgeht und den Lösungsraum vieler und zeitlich kontinuierlicher Ausgangsgrößen abbilden kann (Regression). Hierbei wird nicht nur jeweils eine magnetische und elektrische Signatur aufgenommen, sondern es werden ganze Sequenzen dieser Signaturen über einen beliebig definierbaren Zeithorizont aufgenommen und ausgewertet. Somit wird neben der räumlichen Domäne eine zeitliche Domäne ergänzt, womit eine sehr umfangreiche und anwendungsorientierte Auswertung der durch die dargestellte Mensch-Maschine Schnittstelle bereitgestellten Messungen ermöglicht wird.

### Beispielhafte Anwendung

Im Rahmen der experimentellen Erprobung der neuartigen Mensch-Maschine-Schnittstelle wurden mit den Messungen der Mensch-Maschine-Schnittstelle synchronisierte und normalisierte Messungen von Gelenkwinkeln der Finger der rechten Hand (gemessen durch einen kommerziell verfügbaren Datenhandschuh) als Ausgangsgrößen definiert. Anschließend wurde ein Regressionsproblem formuliert, d.h. eine Vorhersage von Gelenkwinkeln basierend auf Messungen der Mensch-Maschine-Schnittstelle, und mit Hilfe des in Fig. 3 dargestellten, erfindungsgemäßen Verfahrens gelöst. Die Gelenkwinkel der rechten Hand können somit basierend auf den Messungen der Mensch-Maschine Schnittstelle vorhergesagt werden.

Zur Generierung der notwendigen Daten wird der Datenhandschuh an die rechte Hand und die erfindungsgemäße Mensch-Maschine Schnittstelle an den rechten Unterarm so angelegt, dass während feiner, uneingeschränkter Fingerbewegungen die Messwerte des Datenhandschuhs sowie der erfindungsgemäßen Mensch-Maschine Schnittstelle synchron aufgenommen werden können. Die erfindungsgemäße Mensch-Maschine Schnittstelle misst hierbei die Änderungen der elektrischen und magnetischen Signatur, welche infolge der am rechten Unterarm durch die Fingerbewegungen verursachten Hautverformungen bzw. die myoelektrische Aktivität der darunterliegenden Muskeln auftreten. Die Bewegungen werden möglichst natürlich mit unterschiedlicher Intensität und mit einiger Varianz in der Geschwindigkeit über 10 min ausgeführt und entsprechend aufgenommen.

Es sei angemerkt, dass die Definition der Ausgangsgrößen durch die Messwerte des Datenhandschuhs nur ein Ausführungsbeispiel darstellt. Die Ausgangsgrößen können beliebig definiert werden oder gar auf ein Klassifizierungsproblem reduziert werden, sinnvollerweise müssen sie sich jedoch durch die mittels der tragbaren Mensch-Maschine Schnittstelle gemessenen Sensorwerte direkt oder indirekt erklären lassen.

### Experimenteller Aufbau

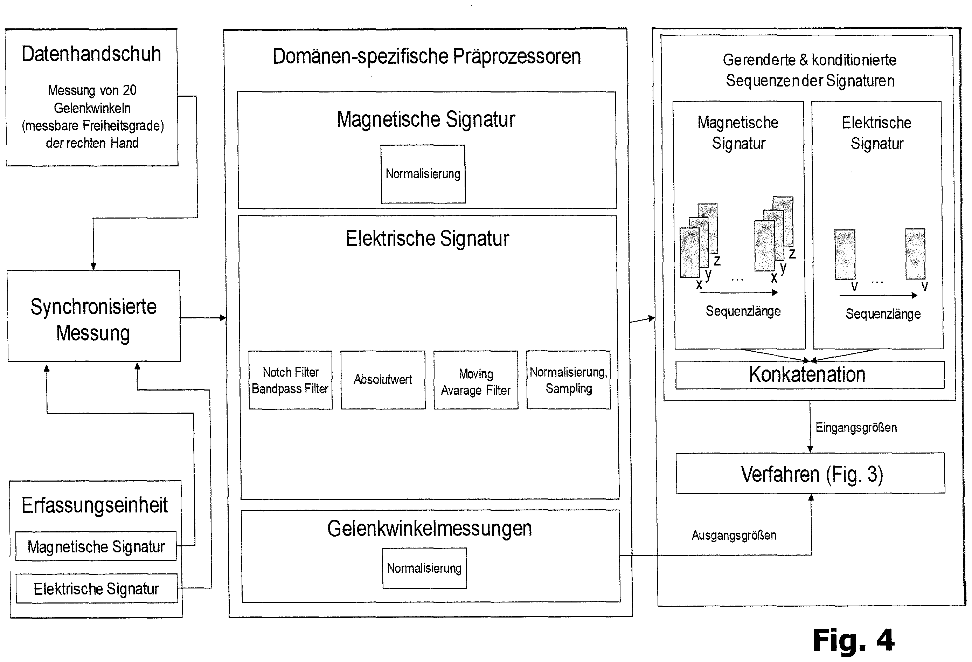

Die im Rahmen des Experiments verwendete Mensch-Maschine Schnittstelle 10 bestand aus einem Array von 128 (8x16-Array) kombinierten Sensorelementen 24 mit einem Abstand zwischen den kombinierten Sensorelementen von 7 mm. Den schematischen Aufbau des Experiments und die Domänen-spezifischen Verarbeitungsschritte zeigt Fig. 4, in der schematisch der Datenhandschuh sowie die synchronisierte Messung der Gelenkwinkel mit den korrespondierenden, durch die Erfassungseinrichtung gemessenen magnetischen und elektrischen Signaturen dargestellt sind. Die synchronisierten Messungen ermöglichen die Zuordnung der durch die Gesamtheit der Gelenkwinkel definierten Hand-Finger-Konfiguration sowie deren zeitlicher Änderung zu den Magnetometer-/Elektrodenmessungen mit Hilfe des erfindungsgemäßen Verfahrens.

Die gemessenen elektrischen Signaturen wurden über Ag/AgCl-Elektroden mit einer Frequenz von 1000 Hz abgetastet. Eine Referenzelektrode wurde am Ellbogen eines Benutzers befestigt. Zunächst wurde die Beseitigung der Netzleitungsstörung durch einen Notch-Filter bei 60 Hz mit einem Q-Faktor von 50 vorgenommen. Anschließend wurden die elektrischen Signaturen Butterworth-Bandpass-gefiltert (2-ter Ordnung, Eckfrequenzen: 20-390 Hz), der Absolutwert gebildet sowie der gleitende Mittelwert über ein gleitendes Fenster der Länge 10 ms in Übereinstimmung mit der Abtastrate der Magnetometer ermittelt. Die aufbereiteten elektrischen Signaturen wurden schließlich in den Wertebereich [0,1] normalisiert. Anschließend wurden die aufbereiteten Messwerte der elektrischen Signaturen in Übereinstimmung mit der Anordnung der kombinierten Sensorelemente in eine Bild-äquivalente Matrix gerendert. Die magnetischen Signaturen wurden mit einer Abtastrate von 100 Hz gemessen und analog zu den elektrischen Signaturen in den Wertebereich [0, 1] normalisiert und in eine Bild-äquivalente Matrix gerendert.

Als abschließender Schritt der Datenkonditionierung (Preprocessing) erfolgte über die Erfassungseinrichtung die zeitliche Synchronisation der gefilterten und gemittelten elektrischen Signaturen mit den magnetischen Signaturen.

Die Beschreibung kontinuierlicher Fingerbewegungen wird unter Berücksichtigung der sinnvollen Freiheitsgrade zur Beschreibung der Bewegung vorteilhaft über die Definition von Gelenkwinkeln erreicht. Diese sind zeitlich kontinuierliche, dynamische Größen und werden, wie oben bereits angesprochen, über die Formulierung und Lösung eines Regressionsproblems aus den reinen Magnetometer-Messungen und den aufbereiteten Messungen der myoelektrischen Aktivität, d.h. den aufbereiteten elektrischen Signaturen ermittelt. Der Datenhandschuh ermöglicht eine indirekte Messung von über die Hand sowie die einzelnen Finger verteilten Freiheitsgraden zur detaillierten Beschreibung der Fingerbewegungen (siehe auch Fig. 4). Über eine Kalibrierung können die gemessenen Sensorwerte anschließend in die biomechanischen Gelenkwinkel der menschlichen Hand konvertiert werden. Die synchronisierten Gelenkwinkelmessungen des kalibrierten Datenhandschuhs wurden demnach als Ausgangsgrößen herangezogen und ebenfalls in den Wertebereich [0, 1] normalisiert. Die Abtastrate des Datenhandschuhs betrug 100 Hz.

Prädiktion kontinuierlicher Bewegungen mittels des erfindungsgemäßen Verfahrens und der erfindungsgemäßen Mensch-Maschine Schnittstelle

Für die Bestimmung der Fingerbewegungen mittels des erfindungsgemäßen Verfahrens aus Fig. 3 und Tabelle 1 wurden folgende Parameter definiert (Tabelle 2). Als Kostenfunktion wurde der Mean-Squared-Error zwischen Prädiktions- und Ausgangsgrößen definiert. Das Optimierungsverfahren wurde zu ADAM ausgewählt (Lernrate = 0,0001; β₁ = 0,9; β₂ = 0,999; decay = 0,0; e = None, amsgrad = False). Das Residual Scaling (R, Tabelle 1) wurde zu R=1 definiert. Wie bereits erwähnt, ergeben sich die Terminologie und default-Implementierungen entsprechend nach KERAS (https://keras.io/ der Version v2.2.4 mit Tensorflow-Backend (https://www.tensorflow.org/) der Version v1.15.0.

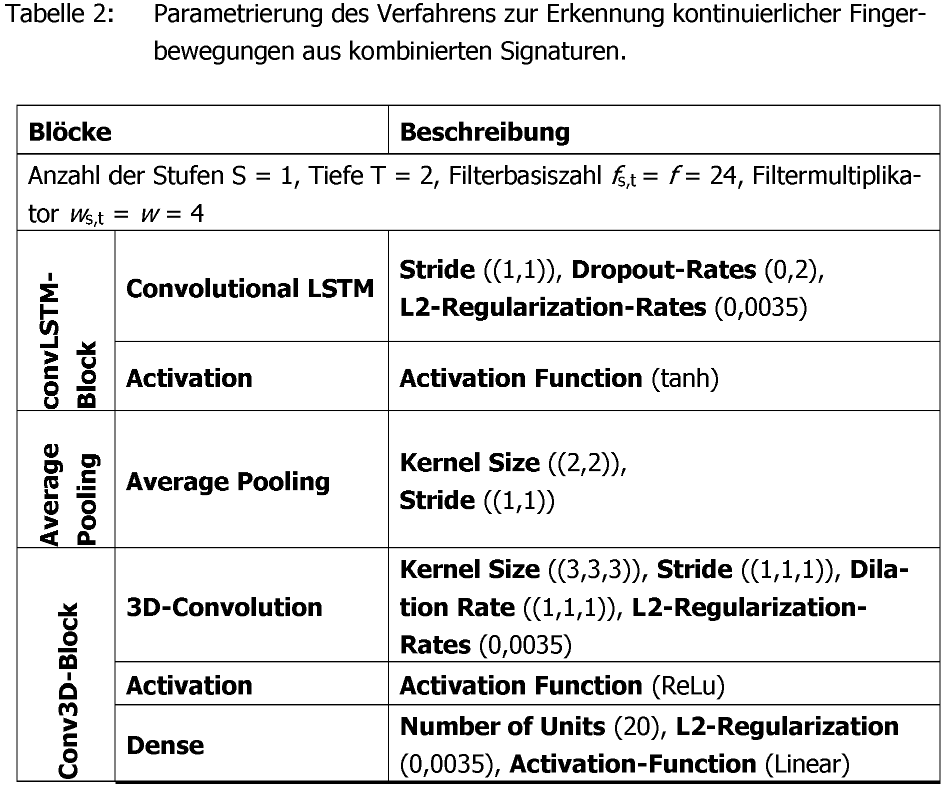

Die somit vollständig definierte Instanz des Verfahrens, d.h. das resultierende Neuronale Netzwerk, wurde im Rahmen von 150 Epochen mit einer Batch-Größe von 64 trainiert. Dem Verfahren wurden hierbei Sequenzen (Sequenzlänge s_{L} = 10) der aufbereiteten, kombinierten Signaturen als gerenderte Bild-äquivalente Matrizen zugeführt, wobei der konkatenierte Filterkanal die Tiefe vier hatte (resultierend aus den x-, y-, z-Messungen der magnetischen Signatur und der aufbereiteten Messungen der elektrischen Signatur, siehe Figur 4). Im Rahmen der experimentellen Erprobung wurde das resultierende Neuronale Netzwerk mit jeweils 42.000 (Trainingsdatensatz), 12.000 Sequenzen (Testdatensatz), sowie 6.000 (Validierungsdatensatz) randomisierten Sequenzen trainiert bzw. ausgewertet.

Die Genauigkeit bzw. Präzision der Vorhersage der Finger-Bewegungen ist natürlich abhängig von der synchronisierten Messfrequenz von Datenhandschuh und tragbarer Mensch-Maschine Schnittstelle, sodass für schnellere Bewegungen auch höhere Messfrequenzen eingehalten werden müssen. Zudem muss ein ausreichend langes Messfenster, welches genügend Informationen (Magnetometer- und elektrische Messungen und daraus konstruierte Größen) für die Prädiktion enthält, gewählt werden. Die resultierende, synchronisierte Messfrequenz ergab sich zu f_{M} = 100 Hz, was der maximalen Abtastrate der Magnetometermessungen und des Datenhandschuhs entsprach. Diese vergleichsweise hohe Frequenz ermöglichte auch für überdurchschnittlich schnelle Greifbewegungen sehr gute Ergebnisse.

Zur Auswertung der Leistungsfähigkeit des Gesamtsystems (erfindungsgemäße Mensch-Maschine Schnittstelle in Kombination mit dem erfindungsgemäßen Verfahren) wurden der mittlere quadratische Fehler (RMSE) sowie das Bestimmtheitsmaß (R2) zwischen den durch den Datenhandschuh gemessenen, tatsächlichen Gelenkwinkelverläufe sowie den durch das Gesamtsystem prädizierten Gelenkwinkelverläufe für die 20 gemessenen Gelenkwinkelfreiheitsgrade für den Kreuzvalidierungsdatensatz über einen Zeithorizont von 3 min ausgewertet. Der mittlere quadratische Fehler betrug durchschnittlich 2,6%, das mittlere Bestimmtheitsmaß durchschnittlich 97,5% für alle Gesten.

Das beschriebene Verfahren in Verbindung mit der tragbaren nicht-invasiven Mensch-Maschine Schnittstelle ist somit ein vielseitig einsetzbares Echtzeitsystem, welches es nicht nur erlaubt, mittels Algorithmen der künstlichen Intelligenz kontinuierliche Finger und Handbewegungen beispielsweise zur intuitiven Manipulation digitaler Systeme zu identifizieren, sondern ermöglicht darüber hinaus durch eine Berücksichtigung von aus den gemessenen bzw. erfassten magnetischen und elektrischen Signaturen (sowie ggfs. Zusätzlich der von Beschleunigungs- und Drehratensensoren stammenden Daten) konstruierten physikalischen und statistischen Größen anwendungsspezifische Analysen, beispielsweise für die medizinische Weiterverarbeitung oder Diagnose.

## Patentansprüche

1. Mensch-Maschine Schnittstelle (10), welche zur nicht-invasiven Anbringung an einem Hautareal eines menschlichen oder tierischen Körpers ausgebildet ist, mit:
- einer flexiblen, ersten magnetischen Schicht (22) zum Inkontaktkommen mit einer Oberfläche des Hautareals, die eine erste Mehrzahl magnetischer oder magnetisierbarer Elemente enthält oder trägt, deren Magnetfelder zusammen zu jedem Zeitpunkt eine magnetische Signatur bilden, wobei die Flexibilität der Schicht (22) solchermaßen ist, dass die Schicht (22) Verformungen der Oberfläche des Hautareals zumindest im Wesentlichen folgen kann, und wobei sich die magnetische Signatur bei einer Verformung der Oberfläche des Hautareals in messbarer Weise ändert,
- einer Erfassungseinrichtung (30) zur Messung der magnetischen Signatur in Abhängigkeit einer Verformung der flexiblen Schicht (22), die der dem Hautareal abgewandten Seite der flexiblen, ersten magnetischen Schicht (22) zugewandt ist,
- einer zweiten Mehrzahl von Potenzialmessungs-Flächenelektroden (28), die in der oder auf der flexiblen Schicht (22) dazu angeordnet sind, in unmittelbaren Kontakt mit der Oberfläche des Hautareals zu gelangen, wobei die Gesamtheit der von den Potenzialmessungs-Flächenelektroden (28) zu einem bestimmten Zeitpunkt erzeugten Messsignale eine sich in Abhängigkeit der Muskelaktivität ändernde elektrische Signatur bildet, und
- einer integrierten oder ausgelagerten Verarbeitungseinheit, die dazu eingerichtet ist, jeweils ein Paar bestehend aus einer magnetischen Signatur und einer zugehörigen elektrischen Signatur einer Konfiguration und/oder Bewegung und/oder einer Kraft, mit der die Bewegung ausgeführt wird, zuzuordnen.

2. Mensch-Maschine Schnittstelle nach Anspruch 1,
**dadurch gekennzeichnet, dass** die flexible erste magnetische Schicht (22) eine Mehrzahl Magnete (26) aufweist, die in Form eines Arrays angeordnet sind.

3. Mensch-Maschine Schnittstelle nach Anspruch 2,
**dadurch gekennzeichnet, dass** die Anzahl Magnete (26) der Anzahl der Potenzialmessungs-Flächenelektroden (28) entspricht, wobei jede Potenzialmessungs-Flächenelektrode (28) fest mit einem Magnet gekoppelt ist.

4. Mensch-Maschine Schnittstelle nach einem der Ansprüche 1 bis 3,
**dadurch gekennzeichnet, dass** die Erfassungseinrichtung mehrere Magnetometer (16) enthält, die vorzugsweise in Form eines Arrays angeordnet sind.

5. Mensch-Maschine Schnittstelle nach einem der vorhergehenden Ansprüche, **dadurch gekennzeichnet, dass** die Potenzialmessungs-Flächenelektroden (28) Elektromyografie (EMG)-Elektroden sind.

6. Mensch-Maschine Schnittstelle nach einem der vorhergehenden Ansprüche, **dadurch gekennzeichnet, dass** zwischen den Potenzialmessungs-Flächenelektroden (28) und den magnetischen oder magnetisierbaren Elementen bzw. Magneten (26) eine elektromagnetische Isolierschicht (38) angeordnet ist.

7. Mensch-Maschine Schnittstelle nach einem der vorhergehenden Ansprüche, **dadurch gekennzeichnet, dass** eine zweite magnetische Schicht (32) mit einer Mehrzahl magnetischer oder magnetisierbarer Elemente zwischen der flexiblen, ersten magnetischen Schicht (22) und der Erfassungseinrichtung (30) oder auf der der flexiblen, ersten magnetischen Schicht (22) abgewandten Seite der Erfassungseinrichtung (30) vorhanden ist, deren magnetische oder magnetisierbare Elemente im Betrieb der Mensch-Maschine Schnittstelle eine magnetische Feldstärke und Polarität derart aufweisen, dass die flexible, erste magnetische Schicht (22) in Richtung des Hautareals vorgespannt wird.

8. Mensch-Maschine Schnittstelle nach einem der vorhergehenden Ansprüche, **dadurch gekennzeichnet, dass** eine Verformung der Oberfläche des Hautareals auf einer unwillkürlichen oder willkürlichen Muskel-, Sehnen-, Band-, Knochen- und/oder Organbewegung basiert.

9. Mensch-Maschine Schnittstelle nach einem der vorhergehenden Ansprüche, **dadurch gekennzeichnet, dass** ferner ein oder mehrere Beschleunigungssensoren und/oder Drehratensensoren an der Mensch-Maschine Schnittstelle (10) vorhanden sind, deren Ausgangssignale der Verarbeitungseinheit zugeführt werden.

10. Mensch-Maschine Schnittstelle nach einem der vorhergehenden Ansprüche, **dadurch gekennzeichnet, dass** die Verarbeitungseinheit dazu eingerichtet ist, die gemessenen magnetischen und elektrischen Signaturen unter Zuhilfenahme von Bayes-Klassifikatoren, eines künstlichen neuronalen Netzes, einer Support Vector Machine, einer Finite State Machine, eines Hidden Markov Modells, einer Relevance Vector Machine, eines Dynamic Time Warping Verfahrens, eines Conditional Random Field Verfahrens, eines Entscheidungsbaums, eines Random Forest Verfahrens, eines k-nearest Neighbors Algorithmus, einer Diskriminanzanalyse, einer linearen Regression, einer logistischen Regression, eines Gauß-Prozesses, eines Perceptrons und/oder von Ensemble-Methoden (Bayes Optimal Classifier, Bagging, Boosting) einer Konfiguration und/oder Bewegung und/oder einer Kraft, mit der die Bewegung ausgeführt wird, zuzuordnen.

11. Mensch-Maschine Schnittstelle nach einem der vorhergehenden Ansprüche, ferner umfassend eine Kommunikationseinheit zum Datenaustausch mit zumindest einem externen Gerät, welches basierend auf den mit der Mensch-Maschine Schnittstelle (10) ausgetauschten Daten eine Aktion ausführen kann, die der zumindest einen zugeordneten Konfiguration und/oder Bewegung und/oder einer Kraft, mit der die Bewegung ausgeführt wird, entspricht.

12. Verfahren zum Erfassen einer Verformung der Oberfläche eines Hautareals eines menschlichen oder tierischen Körpers und Zuordnen der erfassten Verformung zu einer Konfiguration und/oder Bewegung und/oder einer Kraft, mit der die Bewegung ausgeführt wird, mit den Schritten:
- Anordnen einer ersten Mehrzahl magnetischer oder magnetisierbarer Elemente an oder nahe einem Hautareal derart, dass das erste Array einer Hautverformung zumindest im Wesentlichen folgen kann,
- Anordnen einer zweiten Mehrzahl von Potenzialmessungs-Flächenelektroden solchermaßen, dass die Potenzialmessungs-Flächenelektroden in unmittelbaren Kontakt mit der Oberfläche des Hautareals gelangen,
- Ermitteln zumindest einer sich aufgrund einer Hautverformung ergebenden, messbaren Änderung einer magnetischen Signatur der Gesamtheit der ersten Mehrzahl magnetischer oder magnetisierbarer Elemente mittels einer Erfassungseinrichtung zur Messung der magnetischen Signatur,
- Aufnehmen der von der Gesamtheit der zweiten Mehrzahl von Potenzialmessungs-Flächenelektroden zu einem bestimmten Zeitpunkt erzeugten Messsignale zur Gewinnung zumindest einer sich in Abhängigkeit der Muskelaktivität ändernden elektrischen Signatur, und
- Ausführen eines Algorithmus zum Zuordnen der ermittelten zumindest einen magnetischen Signatur und der gewonnenen zumindest einen elektrischen Signatur zu einer Konfiguration und/oder Bewegung und/oder einer Kraft, mit der die Bewegung ausgeführt wird.

13. Verfahren nach Anspruch 12,
**dadurch gekennzeichnet, dass** der Algorithmus eine trainierte Künstliche Intelligenz ist, die den Zusammenhang zwischen magnetischen und elektrischen Signaturen und zugehörigen Konfigurationen und/oder Bewegungen und/oder einer Kraft, mit der die Bewegung ausgeführt wird, auf der Grundlage eines Datensatzes bestehend aus zumindest einer magnetischen und elektrischen Signatur und der zugehörigen Konfiguration und/oder Bewegung und/oder einer Kraft, mit der die Bewegung ausgeführt wird, bestimmt oder erlernt hat.

14. Verfahren nach Anspruch 12,
**dadurch gekennzeichnet, dass** die magnetischen und elektrischen Signaturen unter Zuhilfenahme von Bayes-Klassifikatoren, eines künstlichen neuronalen Netzes, einer Support Vector Machine, einer Finite State Machine, eines Hidden Markov Modells, einer Relevance Vector Machine, eines Dynamic Time Warping Verfahrens, eines Conditional Random Field Verfahrens, eines Entscheidungsbaums, eines Random Forest Verfahrens, eines k-nearest Neighbors Algorithmus, einer Diskriminanzanalyse, einer linearen Regression, einer logistischen Regression, eines Gauß-Prozesses, eines Perceptrons und/oder von Ensemble-Methoden (Bayes Optimal Classifier, Bagging, Boosting) einer Konfiguration und/oder Bewegung und/oder einer Kraft, mit der die Bewegung ausgeführt wird, zugeordnet werden.

15. Verfahren nach einem der Ansprüche 12 bis 14,
**dadurch gekennzeichnet, dass** die zu messenden magnetischen Signaturen mittels mehrerer Magnetometer erfasst werden, die vorzugsweise in Form eines Arrays angeordnet sind.

16. Verfahren nach Anspruch 15,
**dadurch gekennzeichnet, dass** bei der Messung magnetischer Signaturen magnetische Feldstärken und/oder magnetische Flussdichten in x- und/oder y- und/oder z-Richtung erfasst werden.

17. Verfahren nach einem der Ansprüche 12 bis 16,
**dadurch gekennzeichnet, dass** die Verformung der Oberfläche des Hautareals auf einer unwillkürlichen oder willkürlichen Muskel-, Sehnen-, Band-, Knochen- und/oder Organbewegung basiert.

18. Verfahren nach einem der Ansprüche 12 bis 17,
ferner **gekennzeichnet durch** den Schritt des Ermittelns von Beschleunigungen und/oder Drehraten zusätzlich zur Ermittlung von magnetischen Signaturen.

19. Verfahren nach einem der Ansprüche 12 bis 18,
ferner **gekennzeichnet durch** die Schritte
- Zuweisen eines Steuerbefehls zu einer zugeordneten Konfiguration und/oder Bewegung und/oder einer Kraft, mit der die Bewegung ausgeführt wird, und
- Übertragen des Steuerbefehls an ein Gerät.

## Claims

1. A human-machine interface (10) formed for non-invasive attachment to a skin area of a human or animal body, with:
- a flexible, first magnetic layer (22) for coming into contact with a surface of the skin area, which contains or carries a first plurality of magnetic or magnetisable elements, whose magnetic fields together at any time form a magnetic signature, wherein the flexibility of the layer (22) is such that the layer (22) is able to at least substantially follow deformations of the surface of the skin area, and wherein the magnetic signature changes in a measurable manner in the event of a deformation of the surface of the skin area,
- a detection device (30) for measuring the magnetic signature in dependence on a deformation of the flexible layer (22), which faces the side of the flexible, first magnetic layer (22) facing away from the skin area,
- a second plurality of potential-measurement surface electrodes (28) arranged in or on the flexible layer (22) so as to come into direct contact with the surface of the skin area, wherein the totality of the measurement signals generated by the potential-measurement surface electrodes (28) at a given point in time forming an electrical signature that varies in dependence on the muscle activity, and
- an integrated or external processing unit that is configured to assign in each case a pair consisting of a magnetic signature and an associated electric signature to a configuration and/or movement and/or a force with which the movement is carried out.

2. The human-machine interface according to claim 1,
**characterised in that** the flexible, first magnetic layer (22) has a plurality of magnets (26) that are arranged in a shape of an array.

3. The human-machine interface according to claim 2,
**characterised in that** the number of magnets (26) corresponds to the number of potential-measurement surface electrodes (28), wherein each potential-measurement surface electrode (28) is fixedly coupled to a magnet.

4. The human-machine interface according to one of claims 1 to 3,
**characterised in that** the detection device comprises multiple magnetometers (16) that are preferably arranged in a shape of an array.

5. The human-machine interface according to one of the preceding claims, **characterised in that** the potential-measurement surface electrodes (28) are electromyography (EMG) electrodes.

6. The human-machine interface according to one of the preceding claims, **characterised in that** an electromagnetic insulating layer (38) is arranged between the potential-measurement surface electrodes (28) and the magnetic or magnetisable elements or magnets (26).

7. The human-machine interface according to one of the preceding claims, **characterised in that** a second magnetic layer (32) with a plurality of magnetic or magnetisable elements is present between the flexible, first magnetic layer (22) and the detection device (30) or on the side of the detection device (30) facing away from the flexible, first magnetic layer (22), its magnetic or magnetisable elements during operation of the human-machine interface having a magnetic field strength and polarity such that the flexible, first magnetic layer (22) is biased in a direction of the skin area.

8. The human-machine interface according to one of the preceding claims, **characterised in that** a deformation of the surface of the skin area is based on an involuntary or voluntary muscle, tendon, ligament, bone and/or organ movement.

9. The human-machine interface according to one of the preceding claims, **characterised in that** furthermore one or more acceleration sensors and/or angular rate sensors are present on the human-machine interface (10), the output signals of which are supplied to the processing unit.

10. The human-machine interface according to one of the preceding claims, **characterised in that** the processing unit is configured to assign the measured magnetic and electrical signatures to a configuration and/or movement and/or a force with which the movement is carried out with the assistance of Bayes classifiers, an artificial neural network, a support vector machine, a finite state machine, a hidden Markov model, a relevance vector machine, a dynamic time warping method, a conditional random field method, a decision tree, a random forest method, a k-nearest neighbours algorithm, a discriminant analysis, a linear regression, a logistic regression, a Gaussian process, a perceptron and/or ensemble methods (Bayes optimal classifier, bagging, boosting).

11. The human-machine interface according to one of the preceding claims,
further comprising a communication unit for data exchange with at least one external device which, based on the data exchanged with the human-machine interface (10), is able to carry out an action that corresponds to the at least one assigned configuration and/or movement and/or a force with which the movement is carried out.

12. A method for detecting a deformation of the surface of a skin area of a human or animal body and assigning the detected deformation to a configuration and/or movement and/or a force with which the movement is carried out, with the steps of:
- arranging a first plurality of magnetic or magnetisable elements on or near a skin area, such that the first array is able to at least substantially follow a skin deformation,
- arranging a second plurality of potential-measurement surface electrodes such that the potential-measurement surface electrodes come into direct contact with the surface of the skin area,
- determining at least one measurable change in a magnetic signature of the totality of the first plurality of magnetic or magnetisable elements resulting from skin deformation by a detection device for measuring the magnetic signature,
- recording the measurement signals that are generated by the totality of the second plurality of potential-measurement surface electrodes at a specific point in time to obtain at least one electrical signature that varies as a function of muscle activity, and
- executing an algorithm for assigning the determined at least one magnetic signature and the obtained at least one electrical signature to a configuration and/or movement and/or a force with which the movement is carried out.

13. The method according to claim 12,
**characterised in that** the algorithm is a trained artificial intelligence that has ascertained or learned the relationship between magnetic and electrical signatures and associated configurations and/or movements and/or a force with which the movement is carried out on the basis of a data set consisting of at least one magnetic and electrical signature and the associated configuration and/or movement and/or a force with which the movement is carried out.

14. The method according to claim 12,
**characterised in that** the magnetic and electrical signatures are assigned to a configuration and/or movement and/or a force with which the movement is carried out with the assistance of Bayes classifiers, an artificial neural network, a support vector machine, a finite state machine, a hidden Markov model, a relevance vector machine, a dynamic time warping method, a conditional random field method, a decision tree, a random forest method, a k-nearest neighbours algorithm, a discriminant analysis, a linear regression, a logistic regression, a Gaussian process, a perceptron and/or ensemble methods (Bayes optimal classifier, bagging, boosting).

15. The method according to one of claims 12 to 14,
**characterised in that** the magnetic signatures to be measured are detected by several magnetometers that are preferably arranged in a shape of an array.

16. The method according to claim 15,
**characterised in that**, during the measurement of magnetic signatures, magnetic field strengths and/or magnetic flux densities in the x and/or y and/or z direction are detected.

17. The method according to any one of claims 12 to 16,
**characterised in that** the deformation of the surface of the skin area is based on an involuntary or voluntary muscle, tendon, ligament, bone and/or organ movement.

18. The method according to any one of claims 12 to 17,
further **characterised by** the step of determining accelerations and/or rotation rates in addition to determining magnetic signatures.

19. The method according to any one of claims 12 to 18,
further **characterised by** the steps
- allocating a command with an assigned configuration and/or movement and/or a force with which the movement is carried out, and
- transmitting the command to a device.

## Revendications

1. Interface homme-machine (10) qui est conçue pour être fixée de manière non invasive à la surface de la peau d'un corps humain ou animal, comprenant:
- une première couche magnétique souple (22) destinée à venir en contact avec une surface de la peau, qui contient ou porte une première pluralité d'éléments magnétiques ou magnétisables, dont les champs magnétiques forment ensemble à tout moment une signature magnétique, dans laquelle la flexibilité de la couche (22) est telle que la couche (22) peut suivre au moins sensiblement les déformations de la surface de la peau, et dans laquelle la signature magnétique change de manière mesurable lors d'une déformation de la surface de la peau,
- un dispositif de détection (30) pour mesurer la signature magnétique en fonction d'une déformation de la couche souple (22) qui est tournée vers le côté de la première couche magnétique souple (22) qui est opposé à la zone de peau,
- une seconde pluralité d'électrodes de surface de mesure de potentiel (28) qui sont disposées dans ou sur la couche souple (22) pour entrer en contact direct avec la surface de la zone de peau, l'ensemble des signaux de mesure générés par les électrodes de surface de mesure de potentiel (28) à un moment donné formant une signature électrique qui varie en fonction de l'activité musculaire, et
- une unité de traitement intégrée ou externalisée qui est conçue pour associer chaque paire constituée d'une signature magnétique et d'une signature électrique associée à une configuration et/ou un mouvement et/ou une force avec laquelle le mouvement est effectué.

2. Interface homme-machine (10) selon la revendication 1,
**caractérisée en ce que** la première couche magnétique souple (22) comprend une pluralité d'aimants (26) disposés sous la forme d'un réseau.

3. Interface homme-machine (10) selon la revendication 2,
**caractérisée en ce que** le nombre d'aimants (26) correspond au nombre d'électrodes de surface de mesure de potentiel (28), dans laquelle chaque électrode de surface de mesure de potentiel (28) est couplée à demeure à un aimant.

4. Interface homme-machine (10) selon l'une quelconque des revendications 1 à 3,
**caractérisée en ce que** le dispositif de détection comprend plusieurs magnétomètres (16) qui sont de préférence disposés sous la forme d'un réseau.

5. Interface homme-machine (10) selon l'une quelconque des revendications précédentes,
**caractérisée en ce que** les électrodes de surface de mesure de potentiel (28) sont des électrodes d'électromyographie (EMG).

6. Interface homme-machine (10) selon l'une quelconque des revendications précédentes,
**caractérisée en ce que**, entre les électrodes de surface de mesure de potentiel (28) et les éléments magnétiques ou magnétisables ou les aimants (26) est disposée une couche isolante électromagnétique (38).

7. Interface homme-machine (10) selon l'une quelconque des revendications précédentes, **caractérisée en ce qu'**une seconde couche magnétique (32) comprenant une pluralité d'éléments magnétiques ou magnétisables est présente entre la première couche magnétique souple (22) et le dispositif de détection (30) ou sur le côté du dispositif de détection (30) en regard de la première couche magnétique flexible (22),
dont les éléments magnétiques ou magnétisables présentent, lors du fonctionnement de l'interface homme-machine, une intensité de champ magnétique et une polarité telles que la première couche magnétique flexible (22) est précontrainte en direction de la zone de la peau.

8. Interface homme-machine (10) selon l'une quelconque des revendications précédentes, **caractérisée en ce qu'**une déformation de la surface de la zone de peau est basée sur un mouvement involontaire ou volontaire d'un muscle, d'un tendon, d'un ligament, d'un os et/ou d'un organe.

9. Interface homme-machine (10) selon l'une quelconque des revendications précédentes, **caractérisée en ce que** l'interface homme-machine (10) comporte un ou plusieurs capteurs d'accélération et/ou capteurs de vitesse de rotation dont les signaux de sortie sont amenés à l'unité de traitement.

10. Interface homme-machine (10) selon l'une quelconque des revendications précédentes, **caractérisée en ce que** l'unité de traitement est conçue pour associer les signatures magnétiques et électriques mesurées à l'aide de classificateurs bayésiens, d'un réseau neuronal artificiel, d'une machine à vecteur de support, d'une machine à état fini, d'un modèle de Markov caché, d'une machine à vecteur de pertinence, d'un procédé de distorsion temporelle dynamique, d'un procédé de champ aléatoire conditionnel, d'un arbre de décision, d'un procédé de forêt aléatoire, d'un algorithme des plus proches voisins, d'une analyse discriminante, d'une régression linéaire, d'une régression logistique, d'un processus gaussien, d'un perceptron et/ou de méthodes d'ensemble (classificateur Bayes naïf, ensachage, Boost) à une configuration et/ou à un mouvement et/ou à une force avec laquelle le mouvement est exécuté.

11. Interface homme-machine (10) selon l'une quelconque des revendications précédentes, comprenant en outre une unité de communication pour échanger des données avec au moins un appareil externe, qui, sur la base des données échangées avec l'interface homme-machine (10), peut exécuter une action qui correspond à ladite au moins une configuration associée et/ou un mouvement et/ou une force avec laquelle le mouvement est exécuté.

12. Procédé de détection d'une déformation de la surface d'une zone de peau d'un corps humain ou animal et d'association de la déformation détectée à une configuration et/ou un mouvement et/ou une force avec laquelle le mouvement est effectué, comprenant les étapes consistant à:
- disposer une première pluralité d'éléments magnétiques ou magnétisables sur ou à proximité d'une zone de peau, de telle sorte que le premier réseau puisse suivre au moins sensiblement une déformation de la peau,
- disposer une deuxième pluralité d'électrodes de surface de mesure de potentiel de telle sorte que les électrodes de surface de mesure de potentiel entrent en contact direct avec la surface de la zone de peau,
- déterminer au moins une modification mesurable d'une signature magnétique de l'ensemble de la première pluralité d'éléments magnétiques ou magnétisables, obtenue par une déformation de la peau, au moyen d'un dispositif de détection pour mesurer la signature magnétique,
- enregistrer des signaux de mesure générés par l'ensemble de la deuxième pluralité d'électrodes de surface de mesure de potentiel à un moment donné pour obtenir au moins une signature électrique variant en fonction de l'activité musculaire, et
- exécuter un algorithme pour associer ladite signature magnétique détectée et ladite signature électrique obtenue à une configuration et/ou un mouvement et/ou une force avec laquelle le mouvement est effectué.

13. Procédé selon la revendication 12,
**caractérisé en ce que** l'algorithme est une intelligence artificielle entraînée qui a déterminé ou appris la relation entre des signatures magnétiques et électriques et des configurations et/ou des mouvements et/ou une force associés,
avec laquelle le mouvement est exécuté, sur la base d'un ensemble de données constitué d'au moins une signature magnétique et électrique et de la configuration et/ou du mouvement et/ou d'une force associés avec laquelle le mouvement est exécuté.

14. Procédé selon la revendication 12,
**caractérisé en ce que**, les signatures magnétiques et électriques mesurées sont associées à l'aide de classificateurs bayésiens, d'un réseau neuronal artificiel, d'une machine à vecteur de support, d'une machine à état fini, d'un modèle de Markov caché, d'une machine à vecteur de pertinence, d'un procédé de distorsion temporelle dynamique, d'un procédé de champ aléatoire conditionnel, d'un arbre de décision, d'un procédé de forêt aléatoire, d'un algorithme des plus proches voisins, d'une analyse discriminante, d'une régression linéaire, d'une régression logistique, d'un processus gaussien, d'un perceptron et/ou de méthodes d'ensemble (classificateur Bayes naïf, ensachage, Boost) à une configuration et/ou à un mouvement et/ou à une force avec laquelle le mouvement est exécuté.

15. Procédé selon l'une quelconque des revendications 12 à 14,
**caractérisée en ce que** les signatures magnétiques à mesurer sont détectées à l'aide de plusieurs magnétomètres qui sont disposés sous la forme d'un réseau.

16. Procédé selon la revendication 15,
**caractérisé en ce que** lors de la mesure de signatures magnétiques des intensités de champ magnétiques et/ou des densités de flux magnétique dans les directions x et/ou y et/ou z sont détectées.

17. Procédé selon l'une quelconque des revendications 12 à 16,
**caractérisé en ce que** la déformation de la surface de la zone de peau est basée sur un mouvement involontaire ou volontaire d'un muscle, d'un tendon, d'un ligament, d'un os et/ou d'un organe.

18. Procédé selon l'une quelconque des revendications 12 à 17,
**caractérisé en outre par** l'étape consistant dé détecter des accélérations et/ou des vitesses de rotation en plus de la détection des signatures magnétiques.

19. Procédé selon l'une quelconque des revendications 12 à 18,
**caractérisé en outre par** les étapes consistant en
- l'attribution d'un ordre de commande à une configuration et/ou un mouvement associé(e) et/ou une force avec laquelle le mouvement est exécuté, et
- la transmission de l'ordre de commande à un appareil.
